# EUROPEAN PATENT APPLICATION

(11) **EP 4 733 042 A1**
(43) Date of publication of application: **29.04.2026**
(21) Application number: 24923486.5
(22) Date of filing: 29.11.2024
(51) Int. Cl.: B29C 64/124, B29C 64/386, B29C 64/393, B33Y 10/00, B33Y 50/00, B33Y 50/02

(54) **THREE-DIMENSIONAL MODEL PRINTING METHOD AND APPARATUS, AND ELECTRONIC DEVICE AND READABLE STORAGE MEDIUM**

(30) Priority: 08.02.2024 CN 202410177034
(71) Applicant: Guangzhou Heygears IMC. Inc, Guangzhou, Guangdong 510663 (CN)
(72) Inventor: DAI, Wanjing, Guangzhou, Guangdong 510663 (CN); HU, Jun, Guangzhou, Guangdong 510663 (CN); WAN, Xin, Guangzhou, Guangdong 510663 (CN); XIAO, Hongquan, Guangzhou, Guangdong 510663 (CN)
(74) Representative: Herzog IP Patentanwalts GmbH
(86) International application number: PCT/CN2024/135821
(87) International publication number: WO 2025/167284

(57) **Abstract**

Embodiments of the present invention relate to a method and apparatus for printing a three-dimensional model, and an electronic device. The method comprises: acquiring three-dimensional model data; determining cavity data from the three dimensional model data; and selecting a corresponding printing strategy according to the cavity data to perform printing, wherein the printing strategy comprises at least one of: adjusting a liquid surface, controlling a waiting duration, controlling a liquid discharge height, controlling movement parameters of the forming platform, adjusting an exposure strategy, or adjusting image data corresponding to the cavity. The embodiments of the present invention enable users to avoid changing the model structure, adjusting the placement posture of a model, or modifying printing parameters, and a printing method is automatically adjusted according to a slice structure of the model, which can prevent edge defects when printing models with cavity structures, improve printing quality, and enhance printing efficiency.

## Description

### Related Application

The present invention claims priority to Chinese Patent Application no. 202410177034.1 filed to the China National Intellectual Property Administration on February 08, 2024 and entitled "Method and Apparatus for Printing Three-Dimensional Model, Electronic Device, and Readable Storage Medium", which is incorporated herein by reference in its entirety.

### Technical Field

The present invention relates to the technical field of 3D printing, and in particular, to a method and apparatus for printing a three-dimensional model, an electronic device, and a computer readable storage medium.

### Background

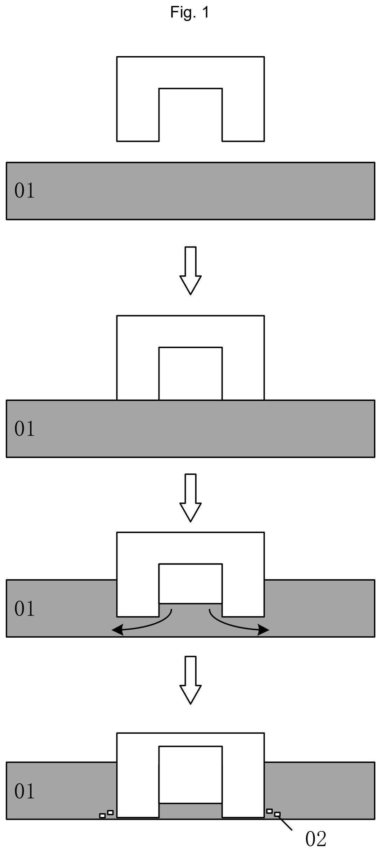

In stereolithography 3D printing, when the printed object contains a cavity (or inverted cup) structure, it can affect the printing quality, leading to poor surface quality or even damage to the printed object. As shown in Fig. 1, if the printed portion of a three-dimensional model includes an inverted cup structure, during the printing process, the printed object adheres to the forming platform layer by layer. After each layer is printed, the forming platform first rises, then descends, and subsequently contacts the liquid surface of the resin 01 such that the cavity of the printed object and the tray forming region form a closed cavity. As the printed object descends, the gas in the cavity forces the liquid below to flow outwards. When the printed object descends to a distance of one layer thickness from the tray bottom region, exposure begins, however, some liquid is still flowing outwards, forming an incompletely cured product, thereby generating a large amount of residual 02, and causing a defect on the surface of the printed object.

With regard to such problems, the common solution at present is to change the design of an original three-dimensional model, for example, providing through holes for the closed cavity of the model, so as to discharge a liquid in the cavity; or changing the placement posture of the model to avoid forming of a closed cavity; or after identifying the presence of a cavity in the model, printing the whole model at a low printing speed, so as to avoid quality defects in the cavity portion.

Above method requires users to have a certain level of knowledge and experience on stereolithography 3D printing, and the described processing method has certain problems. For example, providing through holes may damage the original model structure, changing the placement posture of the model may require additional supports and increasement of the consumption of printing material, and changing the placement posture of the model may not completely avoid the inverted cup structure. The whole model is printed at a low printing speed, which will seriously affect the printing time and the printing efficiency.

In summary, since there are certain technical sills and defects in the industry solution to the problem, most users are aware of the problem but unable to address the problem effectively. Users who are familiar with the described industry solutions need to spend significant time adjusting the model structure, resulting in excessively long printing times, which greatly reduces the convenience of printing.

### Summary

In view of this, in order to solve some or all of the technical problems above, the embodiments of the present invention provide a method and apparatus for printing a three-dimensional model, an electronic device, and a computer readable storage medium.

According to a first aspect, an embodiment of the present invention provides a method for printing a three-dimensional model, applied to a 3D printing device, the 3D printing device comprising a forming platform, and the method comprising: acquiring three-dimensional model data; determining cavity data from the three dimensional model data; and selecting a printing strategy according to the cavity data to perform printing, wherein the printing strategy comprises at least one of: adjusting a liquid surface, controlling a waiting duration, controlling a liquid discharge height, controlling movement parameters of the forming platform, adjusting an exposure strategy, or adjusting image data corresponding to a cavity.

In a possible implementation, the selecting a printing strategy according to the cavity data to perform printing comprises: determining a cavity portion and a non-cavity portion of the three-dimensional model based on the cavity data; and selecting a corresponding cavity printing strategy for the cavity portion to perform printing and selecting a corresponding non-cavity printing strategy for the non-cavity portion to perform printing.

In a possible implementation, the determining the cavity data from the three dimensional model data comprises: identifying a whole of the three-dimensional model to obtain three-dimensional data, wherein the three-dimensional data comprises at least one of: model three-dimensional position information, a model shape, a model volume, a model wall thickness or the number of sub-models; determining the cavity data from the three-dimensional data, wherein the cavity data comprises at least one of: cavity three-dimensional position information, a cavity shape, a cavity volume, a cavity wall thickness, or the number of cavities; and/or, slicing the three-dimensional model, and identifying slices relating to the cavity of the three-dimensional model as a cavity slice set; and identifying each of slices in the cavity slice set to obtain the cavity data, wherein the cavity data comprises at least one of: an area, a position, a shape, a wall thickness of the slice cross-section, or the number of the slice cross-sections, and at least one of: an area, a position, a shape, a wall thickness of the cavity in the slice cross-section or the number of cavities within the slice cross-section.

**In** a possible implementation, the identifying each of slices in the cavity slice set to obtain the cavity data comprises: generating a two-dimensional slice image of each of slices in the slice set, to obtain a two-dimensional slice image set; determining cross-sectional geometric information of each two-dimensional slice image in the two-dimensional slice image set; and determining the cavity data based on the cross-sectional geometric information of each two-dimensional slice image.

In a possible implementation, the selecting a printing strategy according to the cavity data to perform printing comprises: determining, from the two-dimensional slice image set, a cavity image subset corresponding to a cavity region on the basis of the cross-sectional geometric information; for each cavity image in the cavity image subset, on the basis of the cross-sectional geometric information of the cavity image, determining whether the cavity image meets a printing optimization condition; and if the printing optimization condition is met, determining a target cavity printing strategy corresponding to the cavity image, and printing, on the basis of the target cavity printing strategy, a three-dimensional model slice corresponding to the cavity image.

In a possible implementation, the determining, from the two-dimensional slice image set, a cavity image subset corresponding to the cavity region on the basis of the cross-sectional geometric information, comprises: for each two-dimensional slice image in the two-dimensional slice image set, on the basis of the cross-sectional geometric information of the two-dimensional slice image, determining a difference value between an area of a cavity in the two-dimensional slice image and an area of a cavity in a two-dimensional slice image of an upper layer; if the difference value meets a cavity determination condition and it is determined that the two-dimensional slice image contains a through hole, determining a size of the through hole; and if the size of the through hole is less than or equal to a preset size, determining that the two-dimensional slice image is a cavity image.

In a possible implementation, the determining, on the basis of the cross-sectional geometric information of the cavity image, whether the cavity image meets a printing optimization condition, comprises: determining, on the basis of the cross-sectional geometric information of the cavity image, a ratio of a cavity area to a cross-sectional cavity area of the cavity image; if the ratio is greater than or equal to a preset ratio threshold, determining a cavity printing difficulty value of the cavity image on the basis of cross-sectional geometric information of the cavity image; and if the cavity printing difficulty value is greater than or equal to a preset difficulty threshold, determining that the cavity image meets the printing optimization condition.

In a possible implementation, after the determining, on the basis of the cross-sectional geometric information of the cavity image, a ratio of a cavity area to a cross-sectional cavity area of the cavity image, the method further comprises: if the ratio is less than the preset ratio threshold, determining that the cavity image does not meet the printing optimization condition.

In a possible implementation, the determining a cavity printing difficulty value of the cavity image on the basis of cross-sectional geometric information of the cavity image comprises: determining a cavity degree value of the cavity image on the basis of the cross-sectional geometric information of the cavity image; acquiring material parameters of a printing material of the three-dimensional model; and determining the cavity print difficulty value of the cavity image on the basis of the cavity degree value and the material parameters.

In a possible implementation, the determining a cavity degree value of the cavity image on the basis of the cross-sectional geometric information of the cavity image comprises: calculating the cavity degree value of the cavity image on the basis of at least one of following items which are included in the cross-sectional geometric information of the cavity image: a cavity wall thickness, the number of cavities, a cavity area, a cavity shape, or an influence factor between cavities.

In a possible implementation, the determining the target cavity printing strategy corresponding to the cavity image comprises: on the basis of a correlation between a preset cavity printing strategy and a cavity printing difficulty value, determining, from at least two cavity printing policies included in the preset cavity printing strategy, at least one cavity printing strategy corresponding to the cavity printing difficulty value of the cavity image as the target cavity printing strategy.

In a possible implementation, the 3D printing device further comprises a tray, and the at least two cavity printing policies comprise at least two of: method 1: when a liquid surface of a printing material is lower than a preset height, controlling a liquid supplying apparatus to supply the printing material into the tray, so that the liquid surface of the printing material remains higher than a rising height of the forming platform; method 2: when the forming platform descends to a first preset multiple of a layer thickness distance from a bottom of the tray, controlling the forming platform to stop moving, waiting for a first preset duration, then controlling the forming platform to continue descending to a second preset multiple of the layer thickness distance from the bottom of the tray, and initiating a printing operation, wherein the first preset multiple is greater than the second preset multiple; method 3: when the forming platform descends to a third preset multiple of the layer thickness distance from the bottom of the tray, controlling the forming platform to stop moving, waiting for a second preset duration, then controlling the forming platform to ascend to a second preset multiple of the layer thickness distance from the bottom of the tray, and initiating the printing operation, wherein the third preset multiple is less than the second preset multiple; and method 4: when the forming platform descends to a second preset multiple of the layer thickness distance from the bottom of the tray, controlling the forming platform to stop moving, waiting for a third preset duration, and then initiating the printing operation.

In a possible implementation, the 3D printing device further comprises a tray, and the at least two cavity printing policies comprise the following two:
method 5: when the forming platform descends to a first preset multiple of a layer thickness distance from a liquid surface at a top of the tray, controlling the forming platform to stop moving, waiting for a first preset duration, then controlling the forming platform to continue descending to a second preset multiple of the layer thickness distance from the liquid surface at the top of the tray, and initiate the printing operation, wherein the first preset multiple is less than the second preset multiple; and
method 6: when the forming platform descends to a third preset multiple of the layer thickness distance from the liquid surface at the top of the tray, controlling the forming platform to stop moving, waiting for a second preset duration, then controlling the forming platform to ascend to a second preset multiple of the layer thickness distance from the liquid surface at the top of the tray, and initiating the printing operation, wherein the third preset multiple is greater than the second preset multiple.

In a possible implementation, the determining a target cavity printing strategy corresponding to the cavity image, and printing, on the basis of the target cavity printing strategy, a three-dimensional model slice corresponding to the cavity image, comprise: if the wall thickness of a closed cavity in the cavity image is greater than or equal to a preset wall thickness, dividing a closed cavity wall in the cavity image into a filled region and a contour region, and printing the filled region and the contour region in sequence.

According to a second aspect, an embodiment of the present invention provides a three-dimensional model printing apparatus, applied to a 3D printing device, the 3D printing device comprising a forming platform, and the apparatus comprising: an acquisition unit, configured to acquire three-dimensional model data; a first determination unit, configured to determine cavity data from the three-dimensional model data; and a printing unit, configured to select a corresponding printing strategy according to the cavity data to perform printing; wherein the printing strategy comprises at least one of: adjusting a liquid surface, controlling a waiting duration, controlling a liquid discharge height, controlling movement parameters of the forming platform, adjusting an exposure strategy, or adjusting image data corresponding to the cavity.

According to a third aspect, an embodiment of the present invention provides an electronic device, comprising: a memory, configured to store a computer program; a processor, configured to execute the computer program stored in the memory, wherein when the computer program is executed, the method in any embodiment of the method for printing the three-dimensional model of the first aspect of the present invention is implemented.

According to a fourth aspect, an embodiment of the present invention provides a computer readable storage medium, on which a computer program is stored, and when the program is executed by the processor, the method in any embodiment of the method for printing the three-dimensional model in the first aspect is implemented.

According to a fifth aspect, an embodiment of the present invention provides a computer program. The computer program includes computer readable codes. When the computer readable codes run on a device, a processor in the device implements the method in any embodiment of the method for printing the three-dimensional model in the first aspect.

Provided is a three-dimensional printing method, comprising: forming at least one base layer on a forming platform of a printing device; according to an adjusted printing strategy, using a light source mechanism of the printing device to project light to a photosensitive material to cure the photosensitive material, and forming a target layer on a build surface of the printing device, wherein the target layer is adhered to the at least one base layer, and the target layer comprises an unfilled portion and a filled portion completely surrounding the unfilled portion, wherein the at least one base layer and the target layer together define a cavity; wherein the adjusted printing strategy comprises at least one of: adjusting a liquid surface, controlling a waiting duration, controlling a liquid discharge height, controlling movement parameters of the forming platform, adjusting an exposure strategy, or adjusting image data corresponding to the cavity.

In some embodiments, the adjusting a liquid surface comprises: supplying a printing material to a tray of the printing device to prevent air from entering a cavity region of a model.

In some embodiments, the controlling the waiting duration comprises: controlling the forming platform, which carries at least one base layer, to move to a predetermined distance from a build surface and remain stationary for a predetermined duration.

In some embodiments, the controlling the liquid discharge height comprises: controlling the forming platform carrying at least one base layer to move to a position at a predetermined distance from the build surface.

In some embodiments, the controlling movement parameters of the forming platform comprises: adjusting at least one of a movement speed of the forming platform or a movement distance of the forming platform.

In some embodiments, the adjusting the exposure strategy comprises at least one of: performing regional exposure or extending an exposure time.

In some embodiments, the adjusting image data corresponding to the cavity comprises: dividing a slice image, and dividing a printing cross section into a plurality of portions for printing in sequence.

In some embodiments, the at least one base layer comprises a covering layer adhered to the target layer and covering or shielding an unfilled portion of the target layer.

In some embodiments, the at least one base layer comprises a covering layer and at least one intermediate layer, the at least one intermediate layer is adhered to the target layer and the covering layer, the at least one intermediate layer comprises an unfilled portion and a filled portion completely surrounding the unfilled portion, the covering layer covers or shields the unfilled portion of the at least one intermediate layer, and the unfilled portion of the at least one intermediate layer is in communication with the unfilled portion of the target layer.

In some embodiments, the at least one base layer, the target layer on the build surface, and the build surface collectively define the cavity.

In some embodiments, the build surface is defined by a film.

In some embodiments, parameters of the adjusted printing strategy are determined according to at least one of a cavity wall thickness, the number of cavities, a cavity area, or a cavity shape.

In some embodiments, the adjusted printing strategy comprises: lowering the forming platform to a predetermined position, a distance between the predetermined position and the build surface is greater than or less than a thickness of a target layer; keeping the forming platform stationary at the predetermined position for a preset duration; moving the forming platform from the predetermined position to a printing position, a distance between the printing position and the build surface being the thickness of the target layer; and projecting light by the light source mechanism to form the target layer.

In some embodiments, the adjusted printing strategy comprises: moving the forming platform to a printing position, a distance between the printing position and the build surface being a thickness of the target layer; keeping the forming platform stationary at the printing position for a preset duration; and projecting light by the light source mechanism to form the target layer.

In some embodiments, the preset duration is determined on the basis of a change in a force detected by a force sensor mounted on the forming platform.

According to the method and apparatus for printing the three-dimensional model, the electronic device, and the computer readable storage medium provided in the embodiments of the present invention, cavity data is determined from three-dimensional model data to be printed, and a corresponding printing strategy is selected according to the cavity data to perform printing, wherein the printing strategy comprises at least one of: adjusting a liquid surface, controlling a waiting duration, controlling a liquid discharge height, controlling movement parameters of the forming platform, adjusting an exposure strategy, or adjusting image data corresponding to the cavity. In this way, users avoid changing the model structure, adjusting the placement posture of a model, or modifying printing parameters, and a printing method is automatically adjusted according to a slice structure of the model, which can prevent edge defects when printing models with cavity structures, improve printing quality, and enhance printing efficiency.

### Brief Description of the Drawings

Accompanying drawings herein are incorporated into the specification and constitute into a part of the description, show examples consistent with the present invention, and are used to explain principles of the present invention with the specification.

To describe the technical solutions in the embodiments of the embodiments of the present invention or in the existing technology more clearly, the following briefly describes the accompanying drawings required for describing the embodiments or the existing technology. Apparently, a person of ordinary skill in the art may still derive other accompanying drawings from these accompanying drawings without creative efforts.

Exemplary illustrations are made on one or more embodiments by means of figures in the accompanying drawings corresponding thereto, and these exemplary illustrations are not intended to constitute limitation on the embodiments. Elements having the same reference numerals in the drawings are designated as similar elements, and unless otherwise specified, the figures in the drawings are not intended to constitute limiting in scale.
Fig. 1 is a schematic diagram of a printing process of a closed cavity;
Fig. 2 is a schematic diagram of an optional 3D printing device according to an embodiment of the present invention;
Fig. 3 is a schematic diagram of another optional 3D printing device according to an embodiment of the present invention;
Figs. 4A and 4B are schematic diagrams of slices of a three-dimensional model formed with a closed cavity according to an embodiment of the present invention;
Figs. 4C-4F are schematic structural diagrams of a three-dimensional model formed with a closed cavity according to an embodiment of the present invention;
Fig. 5 is a schematic flowchart of a method for printing a three-dimensional model according to an embodiment of the present invention;
Fig. 6 is a schematic flowchart of another method for printing a three-dimensional model according to an embodiment of the present invention;
Fig. 7A is a schematic structural diagram of a three-dimensional model with a cavity formed during printing according to an embodiment of the present invention;
Fig. 7B is a schematic diagram of a cavity image according to an embodiment of the present invention;
Fig. 8 is a schematic flowchart of another method for printing a three-dimensional model according to an embodiment of the present invention;
Fig. 9 is a schematic structural diagram of a three-dimensional model including small through holes according to an embodiment of the present invention;
Fig. 10 is a schematic flowchart of another method for printing a three-dimensional model according to an embodiment of the present invention;
Fig. 11 is a schematic flowchart of another method for printing a three-dimensional model according to an embodiment of the present invention;
Fig. 12 is a schematic diagram of a slice of a three-dimensional model according to an embodiment of the present invention;
Fig. 13A is a schematic diagram of a cavity image having a large wall thickness according to an embodiment of the present invention;
Fig. 13B is a schematic diagram of an image of a filled region after dividing according to an embodiment of the present invention;
Fig. 13C is a schematic diagram of an image of a contour region after dividing according to an embodiment of the present invention;
Fig. 14 is a schematic structural diagram of an apparatus for printing a three-dimensional model according to an embodiment of the present invention;
Fig. 15 is a schematic structural diagram of an electronic device according to an embodiment of the present invention;
Figs. 16A-16D show embodiments of adjusting a liquid surface;
Figs. 17A-17B show embodiments of performing regional exposure.

In the drawings, the same or similar numerals represent the same or similar elements or parts.

Reference signs are as follows:
01, resin; 02, residue; 11, forming platform; 12, tray; 13, light source mechanism; 14, printed object; 15, liquid level of resin; 16, forming region; 17, build surface; 1001: acquisition assembly; 1002: first determination assembly; 1003, printing assembly; 1100, electronic device; 1101, processor; 1102, memory; 11021, operating system; 11022. application program; 1103, user interface; 1104, network interface; 1105, bus system.

### Detailed Description of the Embodiments

Various exemplary embodiments of the present invention will now be described in detail with reference to the accompanying drawings. Obviously, the embodiments as described are only parts of embodiments rather than all the embodiments of the present invention. It should be noted that unless specifically stated otherwise, the relative arrangement of components and steps, numerical expressions and numerical values set forth in these embodiments do not limit the scope of the present invention.

It can be understood by those skilled in the art that the terms "first", "second" and the like in the present application are only used to distinguish objects such as different steps, devices or modules, and neither represent any specific technical meaning nor represent the logical order between them.

It should also be understood that in the present embodiment, "multiple" can refer to two or more, and "at least one" can refer to one, two or more.

It should also be understood that for any component, data or structure mentioned in the present application, in the absence of explicit limitation or contrary revelation given in the context, it can generally be understood as one or more.

In addition, the term "and/or" in the present invention merely describes an associated relationship of associated objects, and means that there may be three relationships. For example, the expression "A and/or B" may mean that A exists alone, A and B exist at the same time, and B exists alone. In addition, the character "/" in the present invention generally indicates that the associated objects before and after are in an "or" relationship.

It should also be understood that the description of each embodiment of the present invention emphasizes the differences between the various embodiments, and the same or similar aspects can be referenced to each other. For the sake of brevity, they will not be repeated one by one.

The following description of at least one exemplary embodiment is merely illustrative in nature and is in no way intended to limit some embodiments of the present invention and any applications or uses thereof.

Techniques, circuits and devices known to a person of ordinary skill in the relevant art may not be discussed in detail, but the techniques, circuits and devices shall be considered as a part of the description, where appropriate.

It should be noted that similar numerals and letters represent similar items in the following figures, and thus once an item is defined in a figure, it need not be further discussed in subsequent figures.

It should be noted that the embodiments in the present invention and features in the embodiments can be combined without conflicts. In order to facilitate understanding of the embodiments of the present invention, hereinafter, the present invention is described in detail with reference to the accompanying drawings and in conjunction with the embodiments. Obviously, the embodiments as described are only parts of embodiments rather than all the embodiments of the present invention. On the basis of the embodiments in the present invention, all other embodiments obtained by a person of ordinary skill in the art without inventive effort shall all belong to the scope of protection of the present invention.

In order to solve the technical problem in the related art that the quality of a printed model having a closed cavity structure is poor, the present invention provides a method for printing a three-dimensional model, which can adaptively adjust the printing manner for a model having a closed cavity structure, thereby improving the printing quality and printing efficiency.

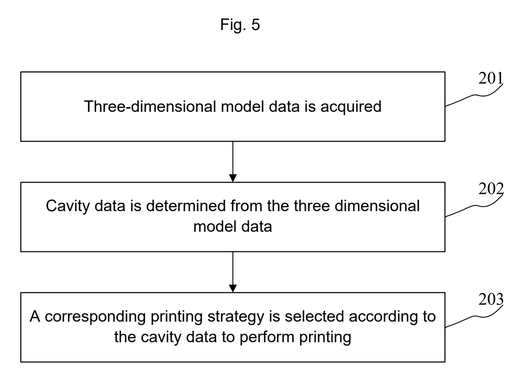

Fig. 5 is a schematic flowchart of a method for printing a three-dimensional model according to an embodiment of the present invention. The method may be applied to a 3D printing device, and the 3D printing device includes a forming platform. An execution subject of the method may be a 3D printing device, and may also be one or more electronic devices such as a notebook computer, a desktop computer, a portable computer and a server. The electronic devices may be communicatively connected to the 3D printing device to execute the method and control the 3D printing device to print. In addition, the execution body of the method may be hardware or software. When the above-described execution subject is hardware, the execution subject may be one or more of the above-described electronic devices. For example, a single electronic device may execute the present method, or a plurality of electronic devices may cooperate with each other to execute the present method. When the above-described execution subject is software, the present method may be implemented as a plurality of software or software modules, or may be implemented as a single software or software module. No specific limitation is made herein.

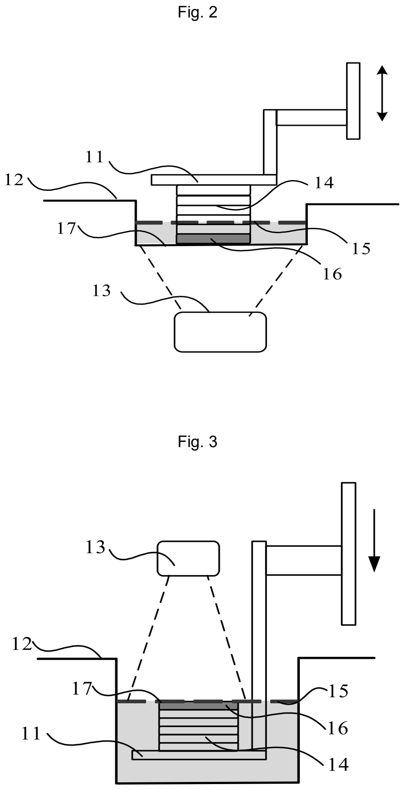

In 3D printing, a 3D model of the printed object is first created, and then the 3D model of the printed object is sliced layer by layer; during printing, the process starts with the first layer of the sliced model, sequentially printing each layer of the sliced model on a previous layer successfully printed, and ultimately producing a complete 3D model of the printed object, wherein the printed object refers to the object being printed during 3D printing. Fig. 2 is a schematic diagram of an optional 3D printing device according to an embodiment of the present invention, which is generally referred to as a bottom-up projection technology. As shown in Fig. 2, which is an optional 3D printing device according to an embodiment of the present invention, when each layer of sliced model is printed, a projected image may be generated according to the shape of this layer of sliced model, and the projected image is sent to a light source mechanism 13, such as a light engine, an LCD, wherein the light source mechanism is a light source device. The light source mechanism 13 may project an image to be projected onto the forming region 16 in the tray 12 filled with a polymerizable liquid (such as photosensitive material), specifically onto the build surface 17, which is the surface at the bottom of the tray in contact with the resin. Under the illumination of light emitted by the light source mechanism 13, the polymerizable liquid on the forming region will be cured between the forming platform 11 and the build surface 17 to form a solid or semi-solid polymer. In this case, the movement of the forming platform 11 may be controlled to separate the solid or semi-solid polymer layer by layer from the build surface 17. This process of curing-separating-curing-separating is repeated to ultimately form a model matching the image to be projected, i.e. the printed object 14. The build surface 17 may be defined by a film, such as an FEP film, of the tray 12.

Fig. 3 is a schematic diagram of another optional 3D printing device according to an embodiment of the present invention, generally referred to as a top-down projection technology. As shown in Fig. 3, which is an optional 3D printing device according to an embodiment of the present invention, when each layer of sliced model is printed, a projected image may be generated according to the shape of this layer of sliced model, and the projected image is sent to a light source mechanism 13, such as a light engine, wherein the light source mechanism is a light source device. The light source mechanism 13 may project an image to be projected onto the forming region 16 in the tray 12 filled with a polymerizable liquid (such as photosensitive material), i.e., onto the build surface 17 which is the surface of the resin at the top of the tray. Under the illumination of light emitted by the light source mechanism 13, the polymerizable liquid on the forming region 16 will be cured between the forming platform 11 and the build surface 17 to form a solid or semi-solid polymer, and in this case, the movement of the forming platform 11 may be controlled to separate the solid or semi-solid polymer layer by layer from the build surface. This process of curing-separating-curing-separating is repeated to ultimately form a model matching the image to be projected, i.e. the printed object 14.

The cavity mentioned in the embodiments of the present invention refers to a cavity within a three-dimensional model (three-dimensional object), such as vases, bowls, cups, dental molds, components, toys, earphone shells, etc. These objects have cavities inside, and their three-dimensional models inevitably contain cavities as well. In a 3D printing process, a three-dimensional model of a three-dimensional object is first sliced to obtain a slice set, and then slices are printed layer by layer to complete 3D printing. In a three-dimensional model, if the nth layer slice is a complete solid cross-section, and the (n+1)th layer to the (n+m)th layer are annular wall cross-sections, then it is determined that there is a cavity. The solid cross-section of the nth layer to the wall cross-section of the (n+m)th layer, and the build surface of the forming region form a closed cavity. The closed cavity leads to issues during the printing process where resin inside the cavity cannot be drained, or the gas within the cavity forces the lower liquid to flow outwards. When beginning transmitting light for the next layer, some liquid is still flowing outward such that the object is incompletely cured, which results in a large amount of residue, leading to surface defects on the printed object and potentially causing warping of the printed object.

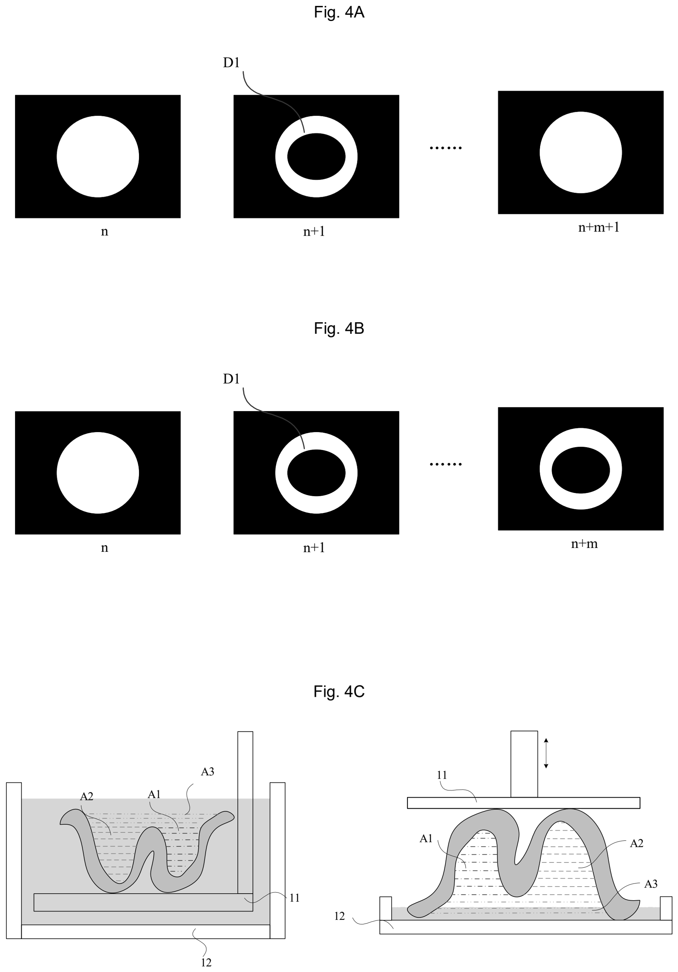

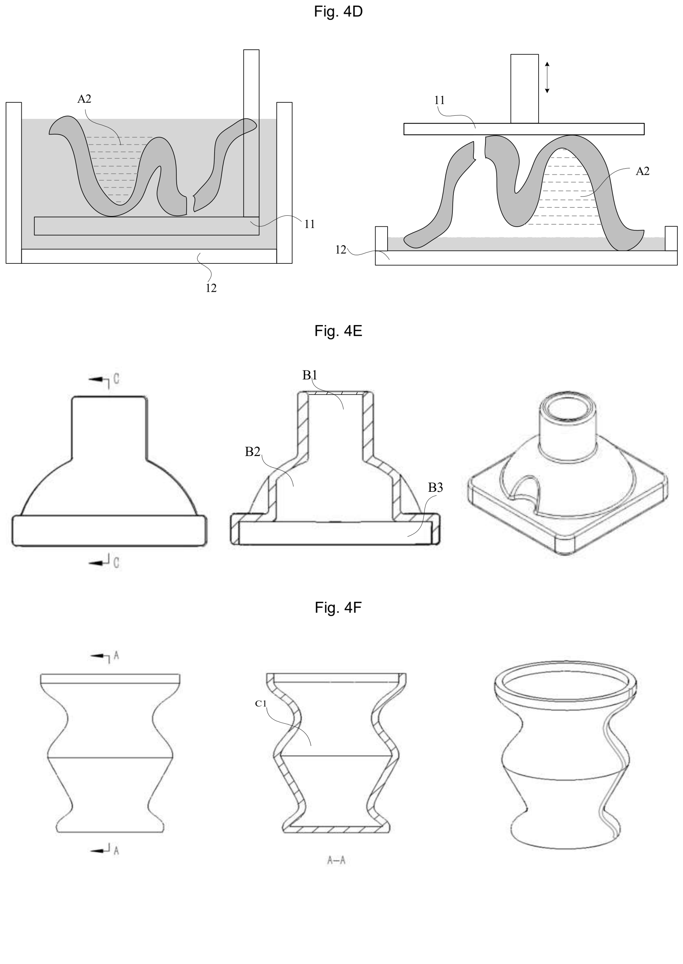

Figs. 4A-4F are schematic structural diagrams of a three-dimensional model formed with a cavity according to an embodiment of the present invention. As shown in Fig. 4A, the nth layer is a complete solid cross-section, the (n+1)th layer to the (n+m)th layer are annular wall cross-sections, and the (n+m+1)th layer is again a complete solid cross-section. In this case, the three-dimensional model is a model with a closed cavity inside, such as a hollow sphere model. As shown in Fig. 4B, the nth layer is a complete solid cross-section, and the (n+1)th layer to the (n+m)th layer are annular wall cross-sections. In this case, the three-dimensional model has an open cavity, such as a cup or vase.

For such a model, a closed cavity, i.e. a closed room, is formed by the bottom wall and side wall of the model and the build surface of the forming region.

As shown in Figs. 4C-4F, the regions labeled A1, A2, A3, B1, B2, B3, and C1 are cavity regions. A three-dimensional model may contain one cavity or a plurality of cavities. The position, shape, volume, wall thickness, and number of cavities may be the same or different. The number of slice layers containing cavities, as well as the area, position, shape, wall thickness, and number of the slice cross-sections of the slice layers containing cavities, may also be the same or different. Similarly, the area, position, shape, wall thickness of the cavity, and number of cavities in the slice cross-sections may be the same or different. Therefore, it is necessary to identify the information of the cavities in order to select the corresponding printing strategy.

At least one base layer (for example, one or more curing layers close to the forming platform 11 in Fig. 4C) is formed on the forming platform 11 of the printing device; According to an adjusted printing strategy, a light source mechanism of the printing device is configured to project light to a photosensitive material to cure the photosensitive material, and a target layer (e.g., a layer to be cured which is away from the forming platform 11 in Fig. 4C) is formed on a build surface of the printing device, wherein the target layer is adhered to the at least one base layer, and the target layer comprises an unfilled portion (i.e., a portion defining the cavity) and a filled portion (i.e., a portion defining a wall of the cavity) completely surrounding the unfilled portion, wherein the at least one base layer and the target layer together define a cavity A2, wherein the adjusted printing strategy comprises at least one of: adjusting a liquid surface, controlling a waiting duration, controlling a liquid discharge height, controlling movement parameters of the forming platform, adjusting an exposure strategy, or adjusting image data of the cavity.

As shown in Fig. 5, the method specifically includes:
step 201: three-dimensional model data is acquired.

In the present embodiment, the three-dimensional model data, i.e., various data of the three-dimensional model to be printed by the 3D printing device, may include, for example, the size, wall thickness and position of the three-dimensional model.

Step 202: cavity data is determined from the three dimensional model data.

In the present embodiment, the cavity data represent the relevant data of the cavity in the three-dimensional model. For example, cavity data includes data such as the position, shape, wall thickness and number of cavities.

Step 203: a corresponding printing strategy is selected according to the cavity data to perform printing.

In the present embodiment, the printing strategy comprises at least one of: adjusting a liquid surface, controlling a waiting duration, controlling a liquid discharge height, controlling movement parameters of the forming platform, adjusting an exposure strategy, or adjusting image data corresponding to the cavity.

For example, when a three-dimensional model includes a cavity region, the printing process for the cavity region encounters problems as described in the background. Therefore, a printing strategy may be set specifically for the cavity region. The described adjusting the liquid surface refers to timely supplying liquid printing material into the tray to prevent air from entering the cavity region of the model. As shown in Figs. 2 and 3, as printing progresses, the printing material (e.g., resin) is continuously consumed, causing the liquid surface 15 of the resin to drop, and thus it is necessary to timely supply the printing material to maintain the liquid surface at a certain height, preventing air from entering the cavity region of the model. The described controlling the waiting duration refers to waiting for a period of time when the forming platform carrying the bottom (or top) of the printed object moves down or up to a certain distance from the forming region, so that the liquid stops flowing and the resin in the forming region is stabilized. The distance between the bottom (or top) of the printed object and the forming region within the waiting duration is the liquid discharge height. The described movement parameters of the forming platform comprise parameters such as a movement speed and a movement distance. The described exposure strategy comprises regional exposure, different exposure time, etc.. The described adjusting image data corresponding to the cavity refers to dividing a slice image, and dividing a printing cross section into a plurality of portions for printing in sequence, so as to eliminate a defect at the edge of the cavity.

As an example, the printing strategy may include: controlling the forming platform to stop moving when it descends to a distance of one layer thickness from the bottom (or top) of the tray, waiting for a certain period of time (e.g., 10 seconds) until the liquid stops flowing, and then printing is performed in the conventional manner. For another example, the printing strategy may include: controlling the liquid supplying device to maintain the liquid surface of the printing material in the tray higher than a preset height, so as to prevent air from entering the closed cavity during printing.

It should be noted that the printing strategy may be applied to the entire three-dimensional model, i.e., the same strategy is used for printing the entire model, so as to eliminate printing defects caused by closed cavities. Different printing policies may also be set for different parts of the three-dimensional model, for example, a printing strategy for cavities is set for a cavity portion, and a conventional printing strategy is used for a non-cavity portion.

According to the method for printing the three-dimensional model provided in the embodiments of the present invention, cavity data is determined from three-dimensional model data to be printed, and a corresponding printing strategy is selected according to the cavity data to perform printing, wherein the printing strategy comprises at least one of: adjusting a liquid surface, controlling a waiting duration, controlling a liquid discharge height, controlling movement parameters of the forming platform, adjusting an exposure strategy, or adjusting image data corresponding to the cavity. In this way, users avoid changing the model structure, adjusting the placement posture of a model, or modifying printing parameters, and a printing method is automatically adjusted according to a slice structure of the model, which can prevent edge defects when printing models with cavity structures, improve printing quality, and enhance printing efficiency.

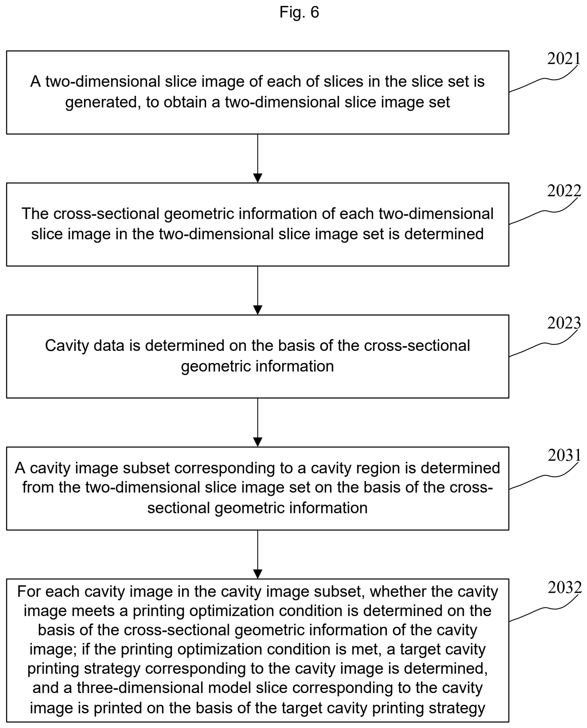

In some optional implementations of the present embodiment, as shown in Fig. 6, step 203 includes:
step 2031: cavity portions and non-cavity portions of the three-dimensional model are determined on the basis of the cavity data,
wherein the cavity portions of the three-dimensional model are portions where a closed cavity is formed between the build surface of the forming region of the printing material and the printed object during the printing process, while the other portions are considered as non-cavity portions. The electronic device may perform horizontal slicing on the three-dimensional model on the basis of the cavity structure characteristics represented by the cavity data, the sliced cross-sections are boundaries of the cavity portions and the non-cavity portions. It should be understood that the number of cavity portions and the number of non-cavity portions may be at least one respectively.

Step 2032: for the cavity portion, a corresponding cavity printing strategy is selected to perform printing, and for the non-cavity portion, a corresponding non-cavity printing strategy is selected to perform printing.

The cavity printing strategy may comprise at least one of the policies set for the cavity portion, such as controlling a waiting duration, controlling a liquid discharge height, controlling movement parameters of the forming platform, adjusting an exposure strategy, or adjusting image data corresponding to the cavity. The non-cavity printing strategy may comprise at least one of the policies set for the non-cavity portion, such as adjusting a liquid surface, controlling a waiting duration, controlling a liquid discharge height, controlling movement parameters of the forming platform, adjusting an exposure strategy, or adjusting image data corresponding to the cavity.

As an example, for the cavity portion, policies such as setting a longer drainage waiting duration and a higher liquid discharge height, and dividing the slice image data into a filled region and a contour region for sequential printing may be employed. For a non-cavity portion, policies such as setting a shorter drainage time and a lower liquid discharge height, and performing printing directly without adjusting the slice image may be employed.

By setting a cavity printing policies and non-cavity printing policies, the present embodiment enables targeted execution of cavity printing policies for the cavity portions of a three-dimensional model, so as to eliminate printing defects caused by closed cavities formed during printing, and enables execution of non-cavity printing policies for non-cavity portions so as to increase printing speed, thereby balancing both print quality and efficiency.

In some optional implementations of the present embodiment, step 202 may include at least one of the following two implementations:
method 1: first, an overall three-dimensional model is identified to obtain three-dimensional data.

The three-dimensional data comprises at least one of: model three-dimensional position information, a model shape, a model volume, a model wall thickness or the number of sub-models. The number of sub-models indicates the number of sub-models included in the three-dimensional model as a whole; three-dimensional position information of the model includes information such as the three-dimensional coordinates of each component included in the model; the model shape may be represented by the coordinates of various points on the contour of the model; the wall thickness of the model is the wall thickness of each component of the model; and the volume of the model is the overall volume of the model and the volumes of various components included in the model.

Cavity data is then determined from the three dimensional data.

The cavity data comprises at least one of: cavity three-dimensional position information, a cavity shape, a cavity volume, a cavity wall thickness, or the number of cavities. For example, the electronic device may analyze three-dimensional data of the model as a whole, and determine therefrom data related to a cavity isolated from the outside; alternatively, a through hole size threshold may be set, and a cavity containing a through hole which has a size less than the through hole size threshold is determined from the non-closed cavity as the closed cavity.

The three-dimensional model is sliced, and slices to which cavities in the three-dimensional model are related are identified and taken as a cavity slice set. Each of slices in the cavity slice set is identified to obtain the cavity data, wherein the cavity data comprises at least one of: the area, the position, the shape, and the wall thickness of each slice cross-section or quantity of the slice cross-section, and at least one of the area, the position, the shape, the wall thickness of the cavity or the quantity of the cavities within the slice cross-section.

Method 2: first, the three-dimensional model is sliced, and slices to which cavities in the three-dimensional model are related are identified and taken as a cavity slice set.

For example, a slice thickness may be preset; slicing processing is performed on the three-dimensional model according to the slice thickness to obtain a slice set; and according to the three-dimensional position information of the cavity, slices of which the slice positions coincide with the cavity are determined from the slice set as a cavity slice set.

Then, each of slices in the cavity slice set is identified to obtain the cavity data.

The cavity data comprises at least one of: the area, the position, the shape, the wall thickness of the slice cross-section or the quantity of the slice cross-section, and at least one of the area, the position, the shape, and the wall thickness of the cavity or the quantity of the cavities within the slice cross-section.

In the present embodiment, two manners for determining cavity data are provided, so that the whole cavity is identified, or the cavity is identified on the basis of slices, thereby improving the accuracy of determining a closed cavity region. The two determination manners may be used at the same time, and may also be used separately. The specific determination manners may be adaptively processed according to practical applications and scenarios.

In some optional implementations of the present embodiment, as shown in Fig. 6, in method 2, each slice in the cavity slice set may be identified according to the following steps to obtain the cavity data:
step 2021: a two-dimensional slice image of each of slices in the slice set is generated, to obtain a two-dimensional slice image set.

In the present embodiment, the electronic device may import a three-dimensional model of an object that the user wants to print, so as to perform slicing processing on the three-dimensional model. For example, a slice thickness may be preset, and slicing processing is performed on the three-dimensional model according to the slice thickness, wherein a cross-section image of each of slices is a corresponding two-dimensional slice image.

Step 2022: the cross-sectional geometric information of each two-dimensional slice image in the two-dimensional slice image set is determined.

In the present embodiment, the electronic device may identify a two-dimensional slice image of each of slices to determine geometric information of the contour of the cross section of the three-dimensional model. The cross-sectional geometric information may include information such as the area, the position, the shape, the cavity wall thickness of the cross section.

Step 2023: cavity data is determined on the basis of the cross-sectional geometric information.

The cross-sectional geometric information may represent a geometric feature of the cavity, and therefore, data representing the cavity may be extracted from the cross-sectional geometric information as the cavity data. The cavity data may include, but is not limited to, at least one of a cavity shape, the number of cavities, or a cavity wall thickness, etc.

In the present embodiment, the cross-sectional geometric information of each two-dimensional slice image is determined, and cavity data is determined according to the cross-sectional geometric information. In this way, cavity data can be determined immediately after slicing the model on the basis of the two-dimensional geometric features of the cavity, thereby facilitating improving the efficiency of determining cavity data.

In some optional implementations of the present embodiment, as shown in Fig. 6, step 203 includes:
step 2031: a cavity image subset corresponding to the cavity region is determined from the two-dimensional slice image set on the basis of the cross-sectional geometric information.

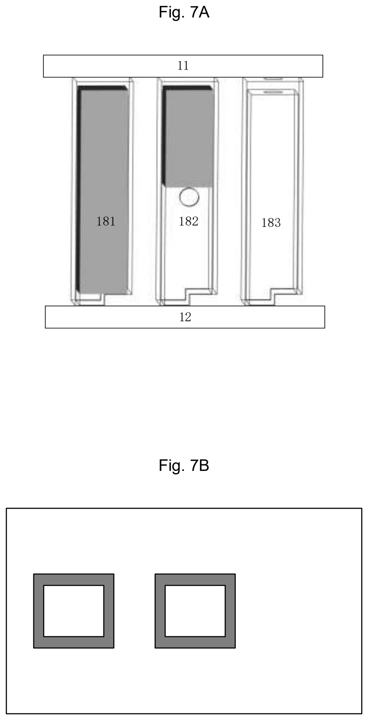

In the present embodiment, the electronic device may determine, from the two-dimensional slice image set and according to geometric features of the cavity, a plurality of two-dimensional slice images corresponding to closed cavity regions as a cavity image subset. As shown in Fig. 7A, three models are printed at the same time, each of which is sliced into 2000 layers, i.e., obtaining 2000 two-dimensional slice images. Two of the models (181 and 182) include cavity layers, i.e., inverted cup layers. When the lowest end of the inverted cup layer comes into contact with the liquid surface in the tray, a closed cavity region is formed. The other model, due to having an opening at the top, does not contain an inverted cup layer, i.e., the model 183 without an inverted cup layer in Fig. 7A. As shown in Fig. 7B, two-dimensional slice images corresponding to 127th-954th layers of three models are shown, and these images form a cavity image subset, and correspond to closed cavity regions of the two models.

Step 2032: for each cavity image in the cavity image subset, whether the cavity image meets a printing optimization condition is determined on the basis of the cross-sectional geometric information of the cavity image; if the printing optimization condition is met, a target cavity printing strategy corresponding to the cavity image is determined, and a three-dimensional model slice corresponding to the cavity image is printed on the basis of the target cavity printing strategy.

**In** the present embodiment, the described printing optimization condition may be a preset condition that indicates that a printing strategy needs to be adjusted for a three-dimensional model slice to be printed because the three-dimensional model slice includes a closed cavity, that is, when the printing optimization condition is met, a printing defect may occur due to the existence of the closed cavity. As an example, the cross-section set information comprises information such as a cavity area and a cavity wall thickness; and if the cavity area is greater than a preset area and/or the cavity wall thickness is less than a preset wall thickness, it can be determined that the printing optimization condition is met.

When a printing optimization condition is met, a target cavity printing strategy may be executed according to preset printing parameters. For example, the target cavity printing strategy may include: controlling the forming platform to stop moving when it descends to a distance of one layer thickness from the bottom (or top) of the tray, waiting for a certain period of time (e.g., 10 seconds) until the liquid stops flowing, and then printing is performed in the conventional manner. For another example, the target cavity printing strategy may include: controlling the liquid supplying device to maintain the liquid surface of the printing material in the tray higher than a preset height, so as to prevent air from entering the closed cavity during printing.

**It** should be noted that step 2032 is executed for each cavity image in the cavity image subset, that is, the same step is repeatedly executed on each cavity image, thereby completing printing the three-dimensional model slices corresponding to each cavity image.

**It** should be understood that, if the cavity image does not meet the printing optimization condition, the three-dimensional model slice corresponding to the cavity image is printed according to a conventional procedure.

**In** the present embodiment, by determining, from the two-dimensional slice image set, the cavity image subset corresponding to the closed cavity region; then on the basis of the cross-sectional geometric information of each cavity image, determining whether the cavity image meets a printing optimization condition; and if so, determining a target cavity printing strategy corresponding to the cavity image, and printing, on the basis of the target cavity printing strategy, a three-dimensional model slice corresponding to the cavity image, users avoid changing the model structure, adjusting the placement posture of a model, or modifying printing parameters, and a printing method is automatically adjusted according to a slice structure of the model, which can prevent edge defects when printing models with cavity structures, improve printing quality, and enhance printing efficiency.

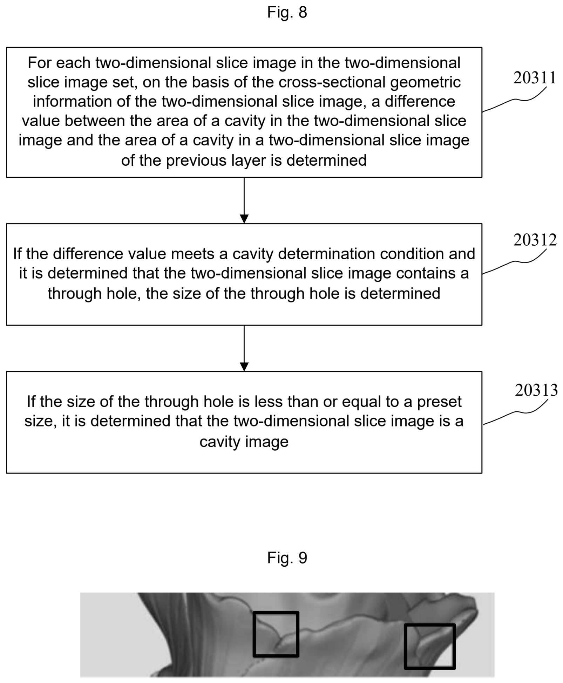

In some optional implementations of the present embodiment, as shown in Fig. 8, step 2031 includes:
Step 20311: for each two-dimensional slice image in the two-dimensional slice image set, on the basis of the cross-sectional geometric information of the two-dimensional slice image, a difference value between the area of a cavity in the two-dimensional slice image and the area of a cavity in a two-dimensional slice image of the previous layer is determined.

For example, the cross-sectional information of a two-dimensional slice image may include information related to the cross-sectional contour. According to the information, it may be determined whether the two-dimensional slice image comprises a cavity (the included cavity may not be a closed cavity, and may also be a through hole), and the cavity area is determined. When the two-dimensional slice image comprises a plurality of cavities, the cavity area may be the sum of the areas of the plurality of cavities.

Step 20312: if the difference value meets a cavity determination condition and it is determined that the two-dimensional slice image contains a through hole, the size of the through hole is determined.

The cavity determination condition is to determine whether the current two-dimensional slice image corresponds to a closed cavity.

Optionally, the cavity determination condition may include: the difference being greater than or equal to a preset value. For example, if the cavity area changes from a zero value in a slice at a previous layer to a non-zero value in the slice at the current layer, it is determined that there is a closed cavity, and a two-dimensional slice image corresponding to the slice at the current layer is a cavity image.

For example, if a cavity appears in the two-dimensional slice image, whether the cavity is a through hole may be determined according to cavity information of a slice before the slice. For example, starting from a slice of a first layer, if a plurality of cavities having an overlapping region appear successively, the cavity is determined to be a through hole. On the basis of the cross-sectional geometric information of each of slices, the size of the through hole may be determined.

Step 20313: if the size of the through hole is less than or equal to a preset size, it is determined that the two-dimensional slice image is a cavity image.

When the size of the through hole is less than or equal to the preset size, since the exhaust speed is low after the model contacts the liquid surface, an effect similar to of a closed cavity is still caused, affecting the printing quality; therefore, the two-dimensional slice image can be determined as a cavity image, and printing is performed according to a printing strategy for the closed cavity.

As shown in Fig. 9, which shows a schematic diagram of a three-dimensional model; in the figure, a part indicated by a rectangular frame is a slit which is equivalent to the through hole; since the size of the slit is relatively small, the part can be determined as a closed cavity region, and a two-dimensional slice image corresponding to the part is a cavity image.

In the present embodiment, by setting a cavity determination condition, and determining, according to the size of the through hole, whether a two-dimensional slice image is a cavity image, an actual print scenario is fully considered according to the structural characteristics of a closed cavity, thereby improving the accuracy of determining a cavity image, so that a print strategy for a closed cavity is more adaptive to the actual print scenario, and the printing quality is improved.

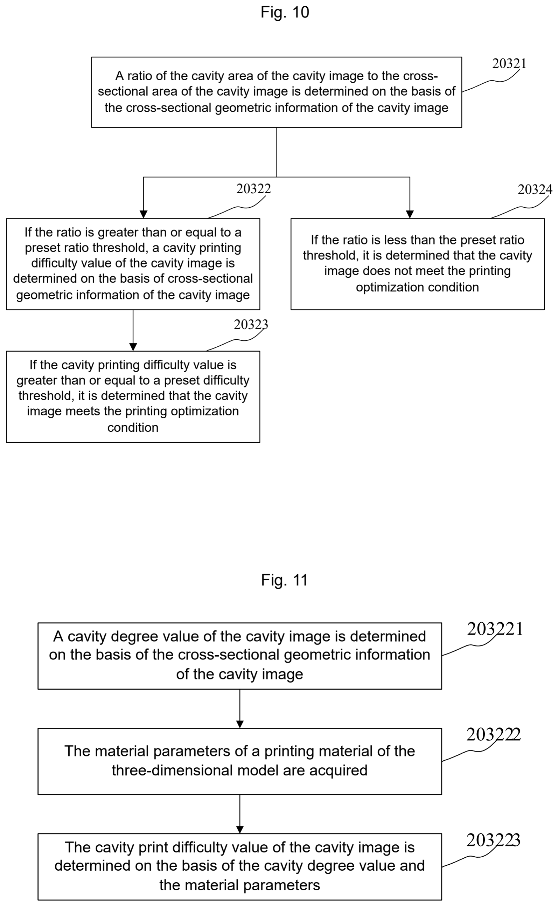

In some optional implementations of the present embodiment, as shown in Fig. 10, in Step 2032, for each cavity image in the cavity image subset, the following steps may further be performed:
Step 20321: a ratio of the cavity area of the cavity image to the cross-sectional area of the cavity image is determined on the basis of the cross-sectional geometric information of the cavity image.

The area of the cross section is the total area of cross sections of the three-dimensional model in the current slice, and the cavity area is the total area of closed regions that are within the cross section and do not contain any opening.

Step 20322: if the ratio is greater than or equal to a preset ratio threshold, a cavity printing difficulty value of the cavity image is determined on the basis of cross-sectional geometric information of the cavity image.

The cavity printing difficulty value is a quantization reference parameter when a closed cavity region is printed. A higher cavity printing difficulty value indicates a greater impact on the quality of the model forming during cavity printing and a higher possibility of quality defects.

As an example, the printing difficulty value may be calculated according to parameters such as the area, the position, the shape, and the wall thickness of the cavity. For example, a weight corresponding to each parameter may be set, weighted summation is performed on the parameters to obtain a printing difficulty value. Generally, a rule followed by a calculation method for a printing difficulty value may comprise: the larger the area of a closed cavity is, the larger the printing difficulty value is; the smaller the minimum wall thickness of the closed cavity is, the larger the printing difficulty value is; the closer the position of the closed cavity is to other cross sections, the larger the printing difficulty value is.

Step 20323: if the cavity printing difficulty value is greater than or equal to a preset difficulty threshold, it is determined that the cavity image meets the printing optimization condition.

The preset difficulty threshold may be preset according to an actual printing scenario. When the cavity printing difficulty value is greater than or equal to the preset difficulty threshold, it indicates that the possibility that a printing defect occurs in a cavity region during printing in a conventional printing manner is higher, and a target cavity printing strategy needs to be set in a targeted manner (for example, increasing the waiting duration below a liquid surface).

In the present embodiment, a cavity printing difficulty value is determined when a ratio of a cavity area to a sectional area is greater than a preset ratio threshold, thereby realizing a quantization operation on the printing difficulty of a cavity; and according to the printing difficulty value, the possibility of a printing quality problem occurring when a closed cavity is printed can be reflected more accurately, so that the printing manner can be adjusted more specifically, thereby further improving the printing quality.

In some optional implementations of the present embodiment, as shown in Fig. 10, after step 20321, the method further includes:
step 20324: if the ratio is less than the preset ratio threshold, it is determined that the cavity image does not meet the printing optimization condition.

For example, when the foregoing ratio is less than the preset ratio threshold, it indicates that the printing duration of the cavity area is short, the duration for printing the whole current slice is longer than the time for printing the cavity region, and therefore, within the whole printing duration, the liquid in contact with the closed cavity can flow sufficiently, and thus the liquid remains relatively stationary when the cavity area is printed. In this case, the printing strategy does not need to be specially adjusted for the closed cavity, thereby avoiding possible problems when printing the closed cavity.

In the present embodiment, when the ratio of the area of a closed cavity to the area of a cross section of a cavity image is relatively small, it is determined that the cavity image does not meet a printing optimization condition, and thus model slices are printed in a conventional printing manner, simplifying some printing manners for closed cavities according to the structure of an actual printed object, thereby improving the printing efficiency.

In some optional implementations of the present embodiment, as shown in Fig. 11, step 20322 includes:
Step 203221: a cavity degree value of the cavity image is determined on the basis of the cross-sectional geometric information of the cavity image.

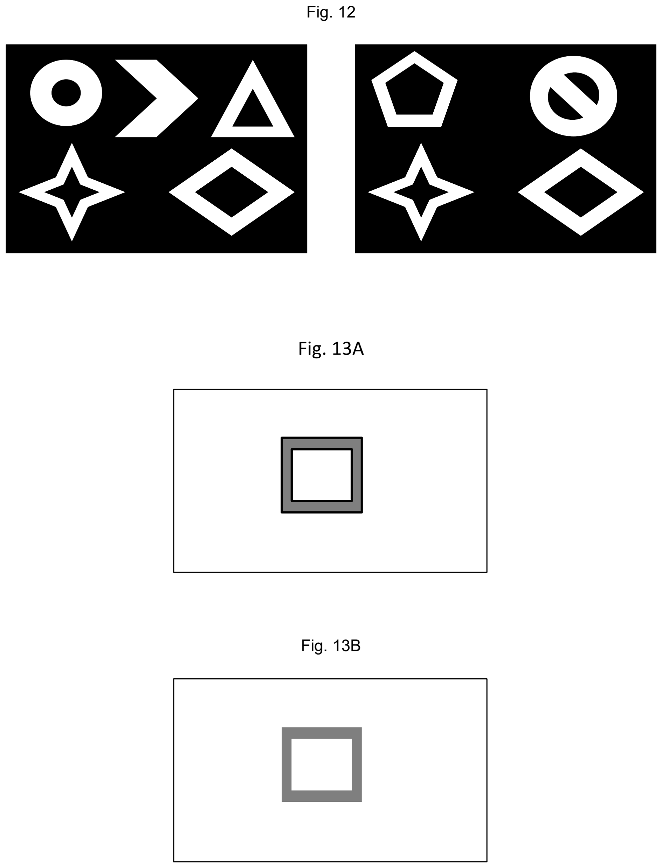

The cross-sectional geometric information may include, but is not limited to, at least one of the following parameters: an area, a position, a shape, or a wall thickness, etc. of the cavity. As shown in Fig. 12, in different slice layers, the areas, positions, shapes and wall thicknesses of cavities may be the same or different. In the same slice layer, the areas, positions, shapes and wall thicknesses of cavities may be the same or may be different. Therefore, it is necessary to calculate the cavity degree value of the cavity image on the basis of at least one of a cavity wall thickness, the number of cavities, a cavity area, a cavity shape, or an influence factor between cavities which are included in the cross-sectional geometric information of the cavity image, so as to determine a printing difficulty degree value according to the cavity degree value, and select a suitable printing strategy. Generally, a weight corresponding to each parameter may be set, and weighted summation is performed on the parameters to obtain a cavity degree value. The rule followed by the method for calculating the degree value of the cavity may comprise: the larger the cavity area is, the larger the cavity degree value is; the smaller the minimum cavity wall thickness is, the larger the cavity degree value is; the closer the position of the cavity is to other cross sections, the larger the cavity degree value is, etc.

Step 203222: the material parameters of a printing material of the three-dimensional model are acquired.

The material parameters may include, but are not limited to, at least one of: a viscosity, a hardness, a tensile strength, or a flexural strength, etc.

Step 203223: the cavity print difficulty value of the cavity image is determined on the basis of the cavity degree value and the material parameters.

For example, different weights may be set for different material parameters, a weight of a cavity degree value may be set, weighted summation is performed on the material parameters and the cavity degree value to obtain a cavity printing difficulty value. As an example, the higher the viscosity of the printed material, the lower the hardness, the lower the tensile strength, the lower the flexural strength, the higher the calculated cavity difficulty value.

In the present embodiment, a cavity printing difficulty value is calculated by integrating material parameters and the cavity degree value, so that data is acquired in more aspects to reflect the size of the cavity printing difficulty, and a high-precision printing difficulty value is obtained in combination with printing material features and structural features, thereby facilitating in further accurately adjusting a printing manner according to the printing difficulty value, and improving the printing quality of a closed cavity.

In some optional implementations of the present embodiment, Step 203221 may be executed as follows:
calculating the cavity degree value of the cavity image on the basis of at least one of a cavity wall thickness, the number of cavities, a cavity area, a cavity shape, or an influence factor between cavities which are included in the cross-sectional geometric information of the cavity image.

The items included in the cross-sectional geometric information may all be quantized and represented, and a cavity degree value can be calculated by setting a weight of each parameter. The weight may be set according to an actual printing scenario, and the setting principle may follow the following rules:
the cavity wall thickness comprises a minimum wall thickness of each cavity, wherein the smaller the minimum wall thickness is, the higher the cavity degree value is; the larger the number of the cavities is, the higher the cavity degree value is; the larger the cavity area is, the higher the cavity degree value is.

The cavity shape may be represented by at least one of the following parameters: a dimension of a bounding rectangle of each cavity, a minimum enclosing circle size, or a dispersion degree value of a cavity edge, etc. The parameters representing the shape of a closed cavity can indicate the degree of deviation of the cross-sectional shape of the closed cavity from a preset shape (e.g., a circle). For example, the bounding rectangle and the minimum enclosing circle may be used to describe the similarity between the cross-sectional shape of a closed cavity and a preset shape, while the dispersion degree value may indicate the deviation value of points on the edge of the cross section of the closed cavity from the center point of the cross section. Therefore, the dispersion degree value can be used to indicate whether the slice cross-section is a regular geometric shape. As shown in Fig. 12, in different slice layers, the areas, positions, shapes and wall thicknesses of cavities may be the same or different. In the same slice layer, the areas, positions, shapes and wall thicknesses of cavities may be the same or may be different. Therefore, it is necessary to calculate the cavity degree value of the cavity image on the basis of at least one of a cavity wall thickness, the number of cavities, a cavity area, a cavity shape, or an influence factor between cavities which are included in the cross-sectional geometric information of the cavity image, so as to determine a printing difficulty degree value according to the cavity degree value, and select a suitable printing strategy. Generally, each parameter may be multiplied by a corresponding coefficient and then added to obtain a numerical value representing the degree of deviation from a regular geometric figure, wherein the larger the numerical value is, the higher the cavity degree value is.

The influence factors between cavities may include, but are not limited to, at least one of the following: a minimum distance between closed cavities, a relative area proportion between closed cavities, an area proportion of the bounding rectangle of each closed cavity relative to the entire slice cross-section, or an area proportion of the minimum enclosing circle of each closed cavity relative to the entire slice cross-section. The larger the influence factor, the higher the cavity degree value.

It should be understood that, when the cavity image includes cross sections of a plurality of closed cavities, a cavity degree value corresponding to each closed cavity may be calculated according to the foregoing parameters and rules, and then the cavity degree value corresponding to the cavity image may be calculated by means of weight summation, calculation of an average value, etc.

In the present embodiment, the cavity degree value is obtained by means of comprehensive calculation according to multiple-dimension parameters included in the cross-sectional geometric information, so that the calculated cavity degree value can more accurately reflect the difficulty in printing a closed cavity, thereby improving the quality of printing a closed cavity.

In some optional implementations of the present embodiment, on the basis of the embodiment corresponding to Fig. 10, step 204 may be further executed as follows:
on the basis of a correlation between a preset cavity printing strategy and a cavity printing difficulty value, determining, from at least two cavity printing policies included in the preset cavity printing strategy, at least one cavity printing manner corresponding to the cavity printing difficulty value of the cavity image as the target cavity printing strategy.

Each printing strategy of the at least two cavity printing policies may be obtained by setting different printing parameters. For example, the larger the cavity printing difficulty value, the longer the printed object may be set to remain at the minimum distance from the bottom of the tray.

In the present embodiment, a plurality of cavity printing policies are set, and a target cavity printing strategy corresponding to the calculated cavity printing difficulty value is selected therefrom, so that a printing strategy is adaptively adjusted according to the structural features of the current three-dimensional model, and the current target cavity printing strategy can better match a closed cavity structure of the current model slice, thereby further improving the printing quality of the model.

In some optional implementation policies of the present embodiment, the at least two cavity printing policies comprise at least two of the following:
method 1: when the liquid surface of the printing material is lower than a preset height, controlling the liquid supplying apparatus to supply printing material into the tray, so that the liquid surface of the printing material remains higher than the rising height of the forming platform.

The amount of the printing material to be filled into the tray may be set arbitrarily, as long as the liquid surface of the printing material is kept higher than the rising height of the forming platform. method 2: when the forming platform descends to a first preset multiple of layer thickness distance from the bottom of the tray, controlling the forming platform to stop moving, waiting for a first preset duration, then controlling the forming platform to continue descending to a second preset multiple of layer thickness distance from the bottom of the tray, and initiating the printing operation, wherein the first preset multiple is greater than the second preset multiple.

Typically, the first preset multiple can be set to any value within the range of 1 to 10 times the layer thickness, for example, it may be 1, 1.5, 2, 2.5, 3, 3.5, 4, 4.5, 5, 5.5, 6, 6.5, 7, 7.5, 8, 8.5, 9, 9.5, or 10 times, as well as any value within the intervals between these values; the second preset multiple may be set to 1 times the layer thickness; the first preset duration may be set to any value within the range of 0.5 to 10 seconds, for example, it may be 0.5, 1, 1.5, 2, 2.5, 3, 3.5, 4, 4.5, 5, 5.5, 6, 6.5, 7, 7.5, 8, 8.5, 9, 9.5, or 10 seconds, as well as any value within the intervals between these values. That is, the forming platform descends to a relatively large distance from the bottom of the tray, allowing the liquid to quickly flow out from the bottom of the printed object; after waiting for a period of time, the forming platform descends to 1 times the layer thickness, and then proceeds with the normal printing process to print the layer of slice.

Method 3: when the forming platform descends to a third preset multiple of layer thickness distance from the bottom of the tray, controlling the forming platform to stop moving, waiting for a second preset duration, then controlling the forming platform to ascend to a second preset multiple of layer thickness distance from the bottom of the tray, and initiating the printing operation, wherein the third preset multiple is less than the second preset multiple.

Typically, the third preset multiple may be set to any value within the range of 0.1 to 0.9 times the layer thickness, for example, it may be 0.1, 0.2, 0.3, 0.4, 0.5, 0.6, 0.7, 0.8, or 0.9 times, as well as any value within the intervals between these values. The second preset duration may be set to a relatively small value, for example, it may be set to 0, that is, upon descending to a distance of 0.1 to 0.9 times the layer thickness from the bottom of the tray, the forming platform immediately ascends to 1 times the layer thickness from the bottom of the tray. This allows most of the liquid at the bottom of the printed object to flow out to the surroundings, and then the forming platform is raised to counteract the liquid flow, followed by proceeding with the normal printing process to print the layer of slice.

Method 4: when the forming platform descends to a second preset multiple of layer thickness distance from the bottom of the tray, controlling the forming platform to stop moving, waiting for a third preset duration, and then initiating the printing operation.

Typically, the third preset duration may be set to any value within the range of 1 to 20 seconds. That is, when the forming platform descends to a distance of 1 times the layer thickness from the bottom of the tray, a long period of time is waited for the liquid at the bottom of the printed object to stand still, and then the layer of slice is printed according to a normal printing process.

In some optional implementation policies of the present embodiment, the at least two cavity printing policies comprise at least two of the following:
Method 5: when the forming platform descends to a first preset multiple of layer thickness distance from the liquid surface at the top of the tray, controlling the forming platform to stop moving, waiting for a first preset duration, then controlling the forming platform to continue descending to a second preset multiple of layer thickness distance from the liquid surface at the top of the tray, and initiating the printing operation, wherein the first preset multiple is less than the second preset multiple; and
method 6: when the forming platform descends to a third preset multiple of layer thickness distance from the liquid surface at the top of the tray, controlling the forming platform to stop moving, waiting for a second preset duration, then controlling the forming platform to ascend to a second preset multiple of layer thickness distance from the liquid surface at the top of the tray, and initiating the printing operation, wherein the third preset multiple is greater than the second preset multiple.

For the adjustment manner, reference may be made to the second manner and the third manner in the foregoing embodiment, and details are not repeatedly described herein.

It should be noted that, in the foregoing various printing manners, except the method 2 and the method 3 as well as the method 5 and the method 6, which cannot be combined due to conflicts in the control of the forming platform, the other manners may be arbitrarily combined based on the magnitude of the cavity printing difficulty value. For example, the method 1 is selected when the cavity printing difficulty value is in a relatively low first interval; the method 1 and the method 2 are selected when the cavity printing difficulty value is in a relatively high second interval; the method 1 and the method 3 are selected when the cavity printing difficulty value is in a relatively high third interval; and the method 1, the method 2 and the method 4 are selected when the cavity printing difficulty value is in a relatively high fourth interval. The top-down projection technology can perform combination processing on the basis of the method 1, the method 4, the method 5 and the method 6.

It should also be noted that, the parameters such as the preset duration, the preset height, and the preset multiple may be set according to various parameters such as the cavity degree value and the material performance in an actual print scenario. The parameters such as the duration and the multiple listed in the present embodiment are merely exemplary, and do not constitute the scope of protection defined in the embodiments of the present invention.

According to the six cavity printing manners provided in the present embodiment, when a cavity printing difficulty value is relatively large, at least one cavity printing manner may be flexibly selected according to the cavity printing difficulty value to perform printing, thereby further improving the operation accuracy for printing a cavity and further improving the printing quality.

In some optional implementations of the present embodiment, step 2032 is further configured to:
if the cavity wall thickness in the cavity image is greater than or equal to a preset wall thickness, divide the cavity wall in the cavity image into a filled region and a contour region, and print the filled region and the contour region in sequence.

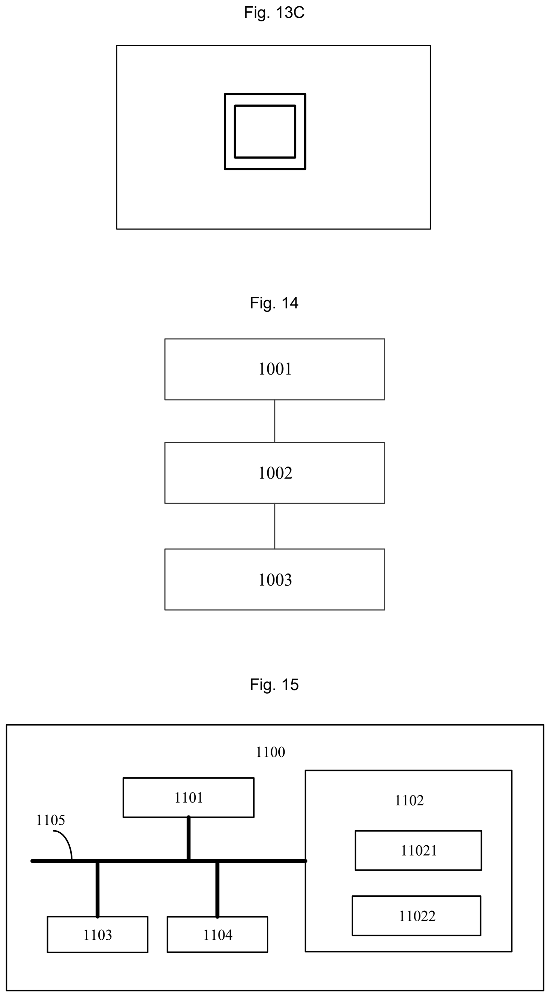

Fig. 13A shows an original cavity image; Fig. 13B shows a divided filled region image; Fig. 13C shows a divided contour region image; during printing, the filled region may be printed first, so that the liquid in the cavity does not flow outwards any more; and then the contour region is printed, so as to decorate the periphery of the filled region, thereby obtaining a flat surface by printing. It should be understood that the filled region image shown in Fig. 13B is merely an example, and in actual printing, the pattern of the filled region may be set arbitrarily, such as a solid pattern, a grid pattern and a honeycomb pattern.

It should be noted that, the printing method provided in the present embodiment may be used alone, or may be combined with any combination of the four cavity printing methods provided in the foregoing embodiments, thereby further reducing a risk of occurrence of residue when a closed cavity is printed, and further improving the printing quality to a greater extent.

Fig. 14 is an apparatus for printing a three-dimensional model according to an embodiment of the present invention, which is applied to a 3D printing device. The 3D printing device comprises a forming platform. The apparatus specifically comprises: an acquisition unit 1001, configured to acquire three-dimensional model data; a first determination unit 1002, configured to determine cavity data from the three-dimensional model data; and a printing unit 1003, configured to select a corresponding printing strategy according to the cavity data to perform printing, wherein the printing strategy comprises at least one of: adjusting a liquid surface, controlling a waiting duration, controlling a liquid discharge height, controlling movement parameters of the forming platform, adjusting an exposure strategy, or adjusting image data corresponding to the cavity.

In some optional implementations of the present embodiment, the printing unit comprises: a first determination module, configured to determine, on the basis of the cavity data, a cavity portion and a non-cavity portion of the three-dimensional model; and a selecting module configured to select a corresponding cavity printing strategy for the cavity portion to perform printing, and select a corresponding non-cavity printing strategy for the non-cavity portion to perform printing.

**In** some optional implementations of the present embodiment, the first determination unit comprises: a first identification module configured to identify the whole of the three-dimensional model to obtain three-dimensional data, wherein the three-dimensional data comprises at least one of: model three-dimensional position information, a model shape, a model volume, a model wall thickness or the number of sub-models; determine the cavity data from the three-dimensional data, wherein the cavity data comprises at least one of: cavity three-dimensional position information, a cavity shape, a cavity volume, a cavity wall thickness, or the number of cavities; and/or a second identification module configured to slice the three-dimensional model, and identifying slices to which cavities in the three-dimensional model are related and taking the identified slices as a cavity slice set; and identify each of slices in the cavity slice set to obtain the cavity data, wherein the cavity data comprises at least one of: the area, position, shape, wall thickness or quantity of the slice cross-section, and at least one of the area, position, shape, wall thickness or quantity of the cavities within the slice cross-section.

**In** some optional implementations of the present embodiment, the second identification module comprises: a generation submodule configured to generate a two-dimensional slice image of each of slices in the slice set, to obtain a two-dimensional slice image set; a first determination submodule, configured to determine cross-sectional geometric information of each two-dimensional slice image in two-dimensional slice image set; and a second determination submodule configured to determine the cavity data on the basis of the cross-sectional geometric information.

**In** some optional implementations of the present embodiment, the printing unit comprises: a second determination module configured to determine, from the two-dimensional slice image set, a cavity image subset corresponding to a cavity region on the basis of the cross-sectional geometric information; a printing module configured to determine, for each cavity image in the cavity image subset and on the basis of the cross-sectional geometric information of the cavity image, whether the cavity image meets a printing optimization condition; and if the printing optimization condition is met, determine a target cavity printing strategy corresponding to the cavity image, and print a three-dimensional model slice corresponding to the cavity image on the basis of the target cavity printing strategy.

In some optional implementations of the present embodiment, the second determination module comprises: a third determination submodule configured to determine, for each two-dimensional slice image in the two-dimensional slice image set and on the basis of the cross-sectional geometric information of the two-dimensional slice image, a difference value between the area of a cavity in the two-dimensional slice image and the area of a cavity in a two-dimensional slice image of the upper layer; if the difference value meets a cavity determination condition and it is determined that the two-dimensional slice image contains a through hole, determine the size of the through hole; and a fourth determination submodule configured to determine, if the size of the through hole is less than or equal to a preset size, that the two-dimensional slice image is a cavity image.

In some optional implementations of the present embodiment, the printing unit comprises: a fifth determination submodule, configured to determine, on the basis of the cross-sectional geometric information of the cavity image, a ratio of the cavity area of the cavity image to the cross-sectional area of the cavity image; a sixth determination submodule configured to determine, if the ratio is greater than or equal to a preset ratio threshold, a cavity printing difficulty value of the cavity image on the basis of cross-sectional geometric information of the cavity image; and a seventh determination submodule configured to determine, if the cavity printing difficulty value is greater than or equal to a preset difficulty threshold, that the cavity image meets the printing optimization condition.

In some optional implementations of the present embodiment, the apparatus further comprises: a second determination unit configured to determine, if the ratio is less than the preset ratio threshold, that the cavity image does not meet the printing optimization condition.

In some optional implementations of the present embodiment, the sixth determination submodule is further configured to: determine a cavity degree value of the cavity image on the basis of the cross-sectional geometric information of the cavity image; acquire material parameters of a printing material of the three-dimensional model; and determine the cavity print difficulty value of the cavity image on the basis of the cavity degree value and the material parameters.

In some optional implementations of the present embodiment, the sixth determination submodule is further configured to calculate the cavity degree value of the cavity image on the basis of at least one of a cavity wall thickness, the number of cavities, a cavity area, a cavity shape, or an influence factor between cavities which are included in the cross-sectional geometric information of the cavity image.

In some optional implementations of the present embodiment, the printing unit is further configured to: on the basis of a correlation between a preset cavity printing strategy and a cavity printing difficulty value, determine, from at least two cavity printing policies included in the preset cavity printing strategy, at least one cavity printing manner corresponding to the cavity printing difficulty value of the cavity image as the target cavity printing strategy.

In some optional implementations of the present embodiment, the at least two cavity printing policies comprise at least two of the following: method 1: when the liquid surface of the printing material is lower than a preset height, controlling the liquid supplying apparatus to supply printing material into the tray, so that the liquid surface of the printing material remains higher than the rising height of the forming platform; method 2: when the forming platform descends to a first preset multiple of layer thickness distance from the bottom of the tray, controlling the forming platform to stop moving, waiting for a first preset duration, then controlling the forming platform to continue descending to a second preset multiple of layer thickness distance from the bottom of the tray, and initiating the printing operation, wherein the first preset multiple is greater than the second preset multiple; method 3: when the forming platform descends to a third preset multiple of layer thickness distance from the bottom of the tray, controlling the forming platform to stop moving, waiting for a second preset duration, then controlling the forming platform to ascend to a second preset multiple of layer thickness distance from the bottom of the tray, and initiating the printing operation, wherein the third preset multiple is less than the second preset multiple; and method 4: when the forming platform descends to a second preset multiple of layer thickness distance from the bottom of the tray, controlling the forming platform to stop moving, waiting for a third preset duration, and then initiating the printing operation.

In some optional implementations of the present embodiment, the at least two cavity printing policies comprise at least two of:
method 5: when the forming platform descends to a first preset multiple of layer thickness distance from the liquid surface at the top of the tray, controlling the forming platform to stop moving, waiting for a first preset duration, then controlling the forming platform to continue descending to a layer thickness that is a second preset multiple of the distance from the liquid surface at the top of the tray, and initiating the printing operation, wherein the first preset multiple is less than the second preset multiple; and
method 6: when the forming platform descends to a third preset multiple of layer thickness distance from the liquid surface at the top of the tray, controlling the forming platform to stop moving, waiting for a second preset duration, then controlling the forming platform to ascend to a layer thickness that is a second preset multiple of the distance from the liquid surface at the top of the tray, and initiating the printing operation, wherein the third preset multiple is greater than the second preset multiple.

For the adjustment manner, reference may be made to the second manner and the third manner in the foregoing embodiment, and details are not repeatedly described herein.

In some optional implementations of the present embodiment, the printing unit is further configured to, if the cavity wall thickness in the cavity image is greater than or equal to a preset wall thickness, divide the cavity wall in the cavity image into a filled region and a contour region, and print the filled region and the contour region in sequence.

The apparatus for printing the three-dimensional model according to the present embodiment may be an apparatus for printing a three-dimensional model as shown in Fig. 14, and may execute all the steps of the foregoing three-dimensional model printing methods, thereby implementing the technical effects of the foregoing three-dimensional model printing methods. For details, reference may be made to the foregoing relevant description, and for brevity, details are not described herein again.

Fig. 15 is a schematic structural diagram of an electronic device according to an embodiment of the present invention. The electronic device 1100 shown in Fig. 15 includes: at least one processor 1101, a memory 1102, at least one network interface 1104, and another user interface 1103. The various components in the electronic device 1100 are coupled together by a bus system 1105. It can be understood that the bus system 1105 is configured to implement connection and communication between these components. In addition to a data bus, the bus system 1105 further includes a power bus, a control bus, and a status signal bus. However, for clarity of description, various buses are marked as the bus system 1105 in Fig. 11.

The user interface 1103 may include a display, a keyboard, a pointing device (for example, a mouse or a trackball), a touch panel or a touchscreen, or the like.

It may be understood that the memory 1102 in the embodiment of the present invention may be a volatile memory or a non-volatile memory, or may include both a volatile memory and a non-volatile memory. The non-volatile memory may be a read-only memory (ROM), a programmable read only memory (PROM), an erasable programmable read-only memory (EPROM), an electrically erasable programmable read-only memory (EEPROM), or a flash memory. The volatile memory may be a random access memory (RAM), which is used as an external cache. As exemplary rather than restrictive description, many forms of RAM can be used, such as a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM), and a direct Rambus random access memory (DRRAM). The memory 1102 of the system and the method described in the embodiments of the present invention is intended to include without being limited to these and any other applicable types of memories.

In some implementations, the memory 1102 stores the following elements: executable units or data structures, or a subset thereof, or an extended set thereof: an operating system 11021 and an application program 11022.

The operating system 11021 includes various system programs, such as a framework layer, a core library layer, and a driver layer, for implementing various basic services and processing hardware-based tasks. The application program 11022 includes various application programs, such as a media player, and a browser, and is configured to implement various application services. A program for implementing the method in the embodiments of the present invention may be included in the application program 11022.

In the present embodiment, by invoking a program or instruction stored in the memory 1102, specifically, the program or instruction may be a program or instruction stored in the application program 11022, and the processor 1101 is configured to execute method steps provided in each method embodiment, including:
acquiring three-dimensional model data; determining cavity data from the three dimensional model data; selecting a corresponding printing strategy according to the cavity data to perform printing, wherein the printing strategy comprises at least one of: adjusting a liquid surface, controlling a waiting duration, controlling a liquid discharge height, controlling movement parameters of the forming platform, or adjusting image data corresponding to the cavity.

The method disclosed in the embodiment of the present invention may be applied to the processor 1101 or implemented by the processor 1101. The processor 1101 may be an integrated circuit chip that has a signal processing capability. In an implementation process, the steps of the foregoing method may be completed by hardware integrated logic circuits in the processor 1101 or instructions in the form of software. The processor 1101 may be a general-purpose processor, a digital signal processor (DSP), an application specific integrated circuit (ASIC), a field-programmable gate array (FPGA), or another programmable logic device, a discrete gate or a transistor logic device, or a discrete hardware component. The processor 1101 may implement or execute the methods, steps, and logical block diagrams disclosed in the embodiments of the present invention. The general-purpose processor may be a microprocessor, or the processor may also be any conventional processor, etc. The steps of the methods disclosed with reference to the embodiments of the present invention may be directly implemented by a hardware decoding processor, or may be implemented by a combination of hardware and software modules in a decoding processor. The software module may be located in a storage medium that is mature in the art, such as a random access memory, a flash memory, a read-only memory, a programmable read-only memory or electrically erasable programmable memory, or a register. The computer-readable storage medium is located in the memory 1102, and the processor 1101 reads information in the memory 1102, and completes the steps of the foregoing method in combination with its hardware.

It may be understood that the embodiments described in the embodiments of the present invention may be implemented by hardware, software, firmware, middleware, microcode, or a combination thereof. For hardware implementation, the processing unit may be implemented in one or more application specific integrated circuits (ASIC), digital signal processors (DSP), digital signal processing devices (DSPD), programmable logic devices (PLD), field-programmable gate arrays (FPGA), general purpose processors, controllers, microcontrollers, microprocessors, and other electronic units for performing the functions described in the present invention, or a combination thereof.

For software implementation, the technologies described in the embodiments of the present invention may be implemented by units that perform the functions described in the present invention. Software code may be stored in the memory and executed by the processor. The memory may be implemented in or outside the processor.

The electronic device provided in the present embodiment may be an electronic device as shown in Fig. 15, and may execute all the steps of the foregoing three-dimensional model printing methods, thereby implementing the technical effects of the foregoing three-dimensional model printing methods. For details, reference may be made to the foregoing relevant description, and for brevity, details are not described herein again.

An embodiment of the present invention further provides a storage medium (computer readable storage medium). The storage medium herein stores one or more programs. The storage medium may include a volatile memory, such as a random access memory; the memory may also include a non-volatile memory, such as a read-only memory, a flash memory, a hard disk, or a solid state drive; the memory may also include a combination of the described types of memory.

When one or more programs in the storage medium may be executed by one or more processors, so as to implement the described three-dimensional model printing method executed on the electronic device side.

The processor is used for executing a program stored in a memory so as to realize the following steps of a method for printing a three-dimensional model executed on an electronic device side:
acquiring three-dimensional model data; determining cavity data from the three dimensional model data; selecting a corresponding printing strategy according to the cavity data to perform printing, wherein the printing strategy comprises at least one of: adjusting a liquid surface, controlling a waiting duration, controlling a liquid discharge height, controlling movement parameters of the forming platform, or adjusting image data corresponding to the cavity.

Disclosed is a three-dimensional printing method, comprising: forming at least one base layer on a forming platform of a printing device; according to an adjusted printing strategy, using a light source mechanism of the printing device to project light to a photosensitive material to cure the photosensitive material, and forming a target layer on a build surface of the printing device, wherein the target layer is adhered to the at least one base layer, and the target layer comprises an unfilled portion and a filled portion completely surrounding the unfilled portion, wherein the at least one base layer and the target layer together define a cavity; wherein the adjusted printing strategy comprises at least one of: adjusting a liquid surface, controlling a waiting duration, controlling a liquid discharge height, controlling movement parameters of the forming platform, adjusting an exposure strategy, or adjusting image data corresponding to the cavity.

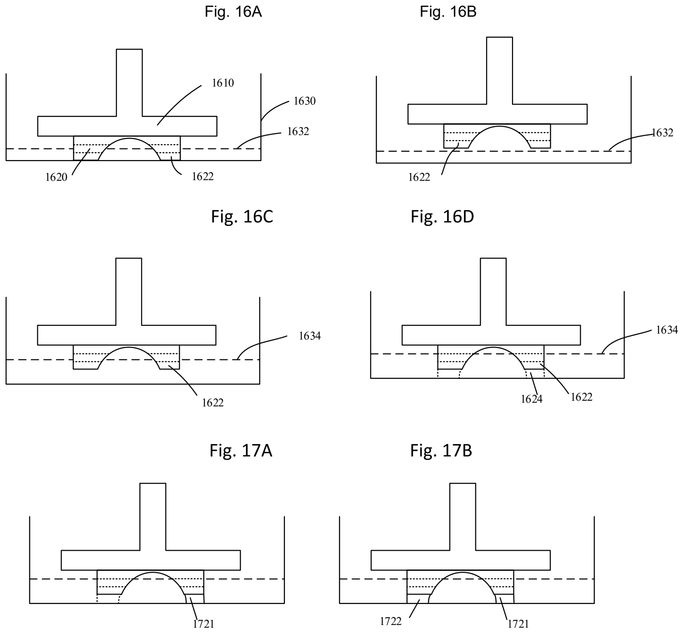

In some embodiments, adjusting a liquid surface comprises: supplying a printing material to a tray of the printing device to prevent air from entering the cavity region of the model. Figs. 16A-16D illustrate related embodiments, where the forming platform 1610 adheres to or carries a cured "inverted cup" type printed object 1620, which includes multiple cured layers, such as the most recently cured layer 1622. The thickness of the layer 1622 is 50µm, and the height of the liquid surface 1632 in the tray 1630 of the printing device is 70µm. As shown in Fig. 16B, to achieve separation of the printed object 1620 (or layer 1622) from the bottom (or film) of the tray, the printed object 1620 may move 130µm away from the bottom of the tray 1630, which causes the layer 1622 of the printed object 1620 to leave the liquid material and be spaced 60µm from the liquid surface 1632. When the printed object 1620 moves downward to cure a new layer, there is a risk of air entering the cavity region of the printed object 1620. In Fig. 16C, the liquid surface is raised by supplying material to the tray 1630. After the printed object 1620 (or layer 1622) is separated from the bottom (or film) of the tray, the layer 1622 is still enveloped by the material (in other words, the layer 1622 is still lower than the liquid surface 1634). In this case, there is substantially no risk of air entering the cavity region of the printed object 1620. In Fig. 16D, the printed object 1620 moves closer to the bottom of the tray 1630 and stops at a position 50µm from the bottom of the tray 1630 to cure a layer 1624 with a thickness of 50µm. During formation of the layer 1622 and formation of the layer 1624, essentially no air enters the cavity region of the printed object 1620.

In some embodiments, controlling the waiting duration includes: controlling the forming platform, carrying the at least one base layer, to move to a predetermined distance from a build surface and to remain stationary for a predetermined duration.

In some embodiments, controlling the liquid discharge height comprises: controlling a forming platform carrying at least one base layer to move to a position at a preset distance from the build surface.

In some embodiments, controlling the forming platform movement parameters comprises adjusting at least one of a movement speed of the forming platform or a movement distance of the forming platform.

In some embodiments, adjusting the exposure strategy comprises at least one of: performing regional exposure or extending an exposure time. Figs. 17A-17B illustrate related embodiments, in order to form the target layer related to the cavity, the material may first be cured to form a portion of the target layer 1721, and then the material may be cured to form another portion of the target layer 1722.

In some embodiments, adjusting image data corresponding to the cavity comprises: dividing a slice image, and dividing a printing cross section into a plurality of portions for printing in sequence.

In some embodiments, the at least one base layer comprises a covering layer adhered to the target layer, and the covering layer covers or shields the unfilled portion of the target layer.

In some embodiments, the at least one base layer comprises a covering layer and at least one intermediate layer, the at least one intermediate layer is adhered to the target layer and the covering layer, the at least one intermediate layer comprises an unfilled portion and a filled portion completely surrounding the unfilled portion, the covering layer covers or shields the unfilled portion of the at least one intermediate layer, and the unfilled portion of the at least one intermediate layer is in communication with the unfilled portion of the target layer.

In some embodiments, the at least one base layer, the target layer on the build surface, and the build surface collectively define a cavity.

In some embodiments, the build surface is defined by a film.

In some embodiments, the parameters of the adjusted printing strategy are determined according to at least one of a cavity wall thickness, the number of cavities, a cavity area, or a cavity shape.

In some embodiments, the adjusted printing strategy comprises: lowering the forming platform to a predetermined position, a distance between the predetermined position and the build surface that is greater than or less than the thickness of a target layer; keeping the forming platform stationary at the predetermined position for a preset duration; moving the forming platform from the predetermined position to a printing position, the distance between the printing position and the build surface being the thickness of the target layer; and projecting light by the light source mechanism to form the target layer.

In some embodiments, the adjusted printing strategy comprises: moving the forming platform to a printing position, the distance between the printing position and the build surface being the thickness of the target layer; keeping the forming platform stationary at the printing position for a preset duration; and projecting light by the light source mechanism to form the target layer.

In some embodiments, force monitoring is performed during the printing process. For example, a force sensor is installed on the forming platform; when the forming platform moves toward the film and contacts the liquid material, the object on the forming platform, with an inverted cup (e.g., an upside-down U-shape) being formed, also moves toward the film and contacts the liquid material. When the inverted cup is not in contact with the liquid material, air is inside the inverted cup. When the inverted cup is in contact with the liquid material and continues to move, air in the inverted cup is compressed (as a certain space is occupied by the liquid material), and the liquid material in the inverted cup is forced to flow outwards, so that the air and the liquid material exert a pressure on the forming platform and are detected by the force sensor (for example, -80N). If the forming platform stops moving at this time (i.e. the waiting duration is counted from this moment), the liquid material in the inverted cup gradually flows outwards, and the force detected by the force sensor gradually changes and approaches zero. The force detected by the force sensor is substantially constant (e.g., between -10N and 0) after a waiting duration (e.g., 5s), which indicates that the liquid material within the inverted cup does not substantially flow outwards, and in this case, light may be projected through a light emitting unit (e.g., the DMD assembly for a DLP) to cure the liquid material.

By monitoring changes in a force value in the same manner, it is found that the waiting duration for each layer remains relatively constant (e.g., 4.5s to 5.5s) during the formation of layers of an inverted cup. However, after the inverted cup has been formed, the waiting duration is greatly reduced (e.g., 0.5s to 2.0s) when forming a new layer having no holes. For example, during the forming of a new layer without holes, when the forming platform stops moving in this case (i.e., the waiting duration is counted from this point), substantially no liquid material flows outwards, and the force detected by the force sensor rapidly changes and approaches zero. The force detected by the force sensor is substantially constant (e.g., between -10 N and 0) after a waiting duration (e.g., 0.5 s).

By monitoring changes in a force value in the same manner, it is found that the waiting duration for each layer remains relatively constant (e.g., 4.5s to 5.5s) during the formation of layers having an inverted cup, but after many layers of inverted cup (e.g., 200 layers) have been formed, the waiting duration is greatly reduced (e.g., 1.5s to 2.5s) when forming a new layer of inverted cup having holes.

For example, during the formation of a new layer (the 201th layer) having holes, when the forming platform stops moving in this case (i.e., the waiting duration is counted from this point), the air therein is compressed (as a certain space is occupied by the liquid material) and forces the liquid material in the inverted cup to flow outward. It can be understood that, because the volume of the cavity for the air is large and the space occupied by the liquid material is small, the air is compressed to a small degree, and the liquid material in the inverted cup does not flow outwards quickly. This causes the force detected by the force sensor to change quickly and approach zero. The force detected by the force sensor is substantially constant (e.g., between -10 N and 0) after a waiting duration (e.g., 2.5 seconds).

By monitoring the force by the force sensor, the waiting duration can be adjusted in time to improve the printing efficiency.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether these functions are executed by hardware or software depends on specific applications and design constraint conditions of the technical solutions. A person skilled in the art may use different circuits to implement the described functions for each particular application, but it should not be considered that the implementation goes beyond the scope of the present invention.

In combination with embodiments disclosed in this specification, circuits or algorithm steps may be implemented by hardware, a software module executed by a processor, or a combination thereof. The software module may be provided in a random access memory (RAM), a memory, a read-only memory (ROM), an electrically programmable ROM, an electrically erasable programmable ROM, a register, a hard disk, a removable magnetic disk, a CD-ROM, or any other form of storage medium known in the art.

It should be understood that the terms used herein are only for the purpose of describing specific exemplary embodiments and are not intended to limit. Unless otherwise explicitly stated in the context, singular forms such as "a", "an", and "the" used in the context can also indicate the inclusion of plural forms. The terms "including", "comprising", "containing", and "having" are inclusive and therefore indicate the existence of the described features, steps, operations, elements, and/or components, but do not exclude the existence or addition of one or more other features, steps, operations, elements, components, and/or their combinations. The circuit steps, processes, and operations described in the context are not interpreted as requiring them to be executed in the specific order described or explained, unless the order of execution is clearly indicated. It should also be understood that additional or alternative steps can be used.

The foregoing descriptions are merely specific implementations of the present invention, so that those skilled in the art can understand or implement the present invention. Various modifications to these embodiments will be readily apparent to those skilled in the art. The general principles defined herein may be implemented in other embodiments, without departing from the spirit or scope of the present invention. Therefore, the present invention will not be limited to the embodiments described herein, but should be in accordance with the broadest scope consistent with the principle and novel features disclosed herein.

### Industrial Applicability

The solution provided in the embodiments of the present invention may be applied to the technical field of 3D printing. In the embodiments of the present invention, cavity data is determined from three-dimensional model data to be printed, and a corresponding printing strategy is selected according to the cavity data to perform printing, wherein the printing strategy comprises at least one of: adjusting a liquid surface, controlling a waiting duration, controlling a separation height, controlling movement parameters of the forming platform, adjusting an exposure strategy, or adjusting image data corresponding to the cavity. In this way, users avoid changing the model structure, adjusting the placement posture of a model, or modifying printing parameters, and a printing method is automatically adjusted according to a slice structure of the model, which can prevent edge defects when printing models with cavity structures, improve printing quality, and enhance printing efficiency.

## Claims

1. A method for printing a three-dimensional model, applied to a 3D printing device, the 3D printing device comprising a forming platform, **characterized in that** the method comprising:
acquiring three-dimensional model data;
determining cavity data from the three dimensional model data; and
selecting a printing strategy according to the cavity data to perform printing, wherein the printing strategy comprises at least one of: adjusting a liquid surface, controlling a waiting duration, controlling a liquid discharge height, controlling movement parameters of the forming platform, adjusting an exposure strategy, or adjusting image data corresponding to a cavity.

2. The method as claimed in claim 1, **characterized in that** the selecting a printing strategy according to the cavity data to perform printing comprises:
determining a cavity portion and a non-cavity portion of the three-dimensional model based on the cavity data; and
selecting a cavity printing strategy for the cavity portion to perform printing, and selecting a non-cavity printing strategy for the non-cavity portion to perform printing.

3. The method as claimed in claim 1, **characterized in that** the determining cavity data from the three dimensional model data comprises:
identifying a whole of the three-dimensional model to obtain three-dimensional data, wherein the three-dimensional data comprises at least one of: model three-dimensional position information, a model shape, a model volume, a model wall thickness or the number of sub-models; determining the cavity data from the three-dimensional data, wherein the cavity data comprises at least one of: cavity three-dimensional position information, a cavity shape, a cavity volume, a cavity wall thickness, or the number of cavities; and/or,
slicing the three-dimensional model, and identifying slices relating to the cavity of the three-dimensional model as a cavity slice set; and identifying each of slices in the cavity slice set to obtain the cavity data, wherein the cavity data comprises at least one of: an area, a position, a shape, a wall thickness of the slice cross-section or the number of slice cross-sections, and at least one of: an area, a position, a shape, a wall thickness of the cavity in the slice cross-section or the number of cavities within the slice cross-section.

4. The method as claimed in claim 3, **characterized in that** the identifying each of slices in the cavity slice set to obtain the cavity data comprises:
generating a two-dimensional slice image of each slice in the slice set, to obtain a two-dimensional slice image set;
determining cross-sectional geometric information of each two-dimensional slice image in the two-dimensional slice image set; and
determining the cavity data based on the cross-sectional geometric information of each two-dimensional slice image.

5. The method as claimed in claim 4, **characterized in that** selecting a printing strategy according to the cavity data to perform printing comprises:
determining, from the two-dimensional slice image set, a cavity image subset corresponding to a cavity region on the basis of the cross-sectional geometric information;
for each cavity image in the cavity image subset, on the basis of the cross-sectional geometric information of the cavity image, determining whether the cavity image meets a printing optimization condition; and if the printing optimization condition is met, determining a target cavity printing strategy corresponding to the cavity image, and printing, on the basis of the target cavity printing strategy, a three-dimensional model slice corresponding to the cavity image.

6. The method as claimed in claim 5, **characterized in that** the determining, from the two-dimensional slice image set, a cavity image subset corresponding to the cavity region on the basis of the cross-sectional geometric information, comprises:
for each two-dimensional slice image in the two-dimensional slice image set, on the basis of the cross-sectional geometric information of the two-dimensional slice image, determining a difference value between an area of a cavity in the two-dimensional slice image and an area of a cavity in a two-dimensional slice image of an upper layer; if the difference value meets a cavity determination condition and it is determined that the two-dimensional slice image contains a through hole, determining a size of the through hole; and
if the size of the through hole is less than or equal to a preset size, determining that the two-dimensional slice image is a cavity image.

7. The method as claimed in claim 5, **characterized in that** the determining, on the basis of the cross-sectional geometric information of the cavity image, whether the cavity image meets a printing optimization condition, comprises:
determining, on the basis of the cross-sectional geometric information of the cavity image, a ratio of a cavity area to a cross-sectional area of the cavity image;
if the ratio is greater than or equal to a preset ratio threshold, determining a cavity printing difficulty value of the cavity image on the basis of cross-sectional geometric information of the cavity image; and
if the cavity printing difficulty value is greater than or equal to a preset difficulty threshold, determining that the cavity image meets the printing optimization condition.

8. The method as claimed in claim 7, **characterized in that** after the determining, on the basis of the cross-sectional geometric information of the cavity image, a ratio of a cavity area to a cross-sectional area of the cavity image, the method further comprises:
if the ratio is less than the preset ratio threshold, determining that the cavity image does not meet the printing optimization condition.

9. The method as claimed in claim 7, **characterized in that** the determining a cavity printing difficulty value of the cavity image on the basis of cross-sectional geometric information of the cavity image comprises:
determining a cavity degree value of the cavity image on the basis of the cross-sectional geometric information of the cavity image;
acquiring material parameters of a printing material of the three-dimensional model; and
determining the cavity print difficulty value of the cavity image on the basis of the cavity degree value and the material parameters.

10. The method as claimed in claim 9, **characterized in that** the determining a cavity degree value of the cavity image on the basis of the cross-sectional geometric information of the cavity image comprises:
calculating the cavity degree value of the cavity image on the basis of at least one of following items which are included in the cross-sectional geometric information of the cavity image: a cavity wall thickness, the number of cavities, a cavity area, a cavity shape, or an influence factor between cavities.

11. The method as claimed in claim 5, **characterized in that** the determining the target cavity printing strategy corresponding to the cavity image comprises:
on the basis of a correlation between a preset cavity printing strategy and a cavity printing difficulty value, determining, from at least two cavity printing policies included in the preset cavity printing strategy, at least one cavity printing strategy corresponding to the cavity printing difficulty value of the cavity image as the target cavity printing strategy.

12. The method as claimed in claim 11, **characterized in that** the 3D printing device further comprises a tray, and the at least two cavity printing policies comprise at least two of:
method 1: when a liquid surface of a printing material is lower than a preset height, controlling a liquid supplying apparatus to supply the printing material into the tray, so that the liquid surface of the printing material remains higher than a rising height of the forming platform;
method 2: when the forming platform descends to a position that is a first preset multiple of a layer thickness away from a bottom of the tray, controlling the forming platform to stop moving, waiting for a first preset duration, then controlling the forming platform to continue descending to a position that is a second preset multiple of the layer thickness away from the bottom of the tray, and initiating a printing operation, wherein the first preset multiple is greater than the second preset multiple;
method 3: when the forming platform descends to a position that is a third preset multiple of the layer thickness away from the bottom of the tray, controlling the forming platform to stop moving, waiting for a second preset duration, then controlling the forming platform to ascend to a position that is a second preset multiple of the layer thickness away from the bottom of the tray, and initiating the printing operation, wherein the third preset multiple is less than the second preset multiple; and
method 4: when the forming platform descends to a position that is a second preset multiple of the layer thickness away from the bottom of the tray, controlling the forming platform to stop moving, waiting for a third preset duration, and then initiating the printing operation.

13. The method as claimed in claim 11, **characterized in that** the 3D printing device further comprises a tray, and the at least two cavity printing policies comprise the following two:
method 5: when the forming platform descends to a position that is a first preset multiple of the layer thickness away from a liquid surface at a top of the tray, controlling the forming platform to stop moving, waiting for a first preset duration, then controlling the forming platform to continue descending to a position that is a second preset multiple of the layer thickness away from the liquid surface at the top of the tray, and initiating the printing operation, wherein the first preset multiple is less than the second preset multiple; and
method 6: when the forming platform descends to a position that is a third preset multiple of the layer thickness away from the liquid surface at the top of the tray, controlling the forming platform to stop moving, waiting for a second preset duration, then controlling the forming platform to ascend to a position that is a second preset multiple of the layer thickness away from the liquid surface at the top of the tray, and initiating the printing operation, wherein the third preset multiple is greater than the second preset multiple.

14. The method as claimed in any one of claims 5-13, **characterized in that** the determining a target cavity printing strategy corresponding to the cavity image, and printing, on the basis of the target cavity printing strategy, a three-dimensional model slice corresponding to the cavity image, comprise:
if the cavity wall thickness in the cavity image is greater than or equal to a preset wall thickness, dividing a cavity wall in the cavity image into a filled region and a contour region, and printing the filled region and the contour region in sequence.

15. A device for printing a three-dimensional model, applied to a 3D printing device, the 3D printing device comprising a forming platform, **characterized in that** the apparatus comprising:
an acquisition unit, configured to acquire three-dimensional model data;
a first determination unit, configured to determine cavity data from the three-dimensional model data; and
a printing unit, configured to select a corresponding printing strategy according to the cavity data to perform printing; wherein the printing strategy comprises at least one of: adjusting a liquid surface, controlling a waiting duration, controlling a liquid discharge height, controlling movement parameters of the forming platform, adjusting an exposure strategy, or adjusting image data corresponding to a cavity.

16. An electronic device, **characterized in that** comprising:
a memory, configured to store a computer program; and
a processor, configured to execute the computer program stored in the memory, wherein when the computer program is executed, the method for printing the three-dimensional model as claimed in any one of claims 1 to 14 is implemented.

17. A computer readable storage medium, on which a computer program is stored, wherein when the computer program is executed by a processor, the method for printing the three-dimensional model as claimed in any one of claims 1-14 is implemented.

18. A three-dimensional printing method, **characterized in that** comprising:
forming at least one base layer on a forming platform of a printing device;
according to an adjusted printing strategy, using a light source mechanism of the printing device to project light to a photosensitive material to cure the photosensitive material, and forming a target layer on a build surface of the printing device, wherein the target layer is adhered to the at least one base layer, and the target layer comprises an unfilled portion and a filled portion completely surrounding the unfilled portion, wherein the at least one base layer and the target layer together define a cavity;
wherein the adjusted printing strategy comprises at least one of: adjusting a liquid surface, controlling a waiting duration, controlling a liquid discharge height, controlling movement parameters of the forming platform, adjusting an exposure strategy, or adjusting image data of the cavity.

19. The three-dimensional printing method as claimed in claim 18, **characterized in that** the adjusting a liquid surface comprises: supplying a printing material to a tray of the printing device to prevent air from entering a cavity region of a model.

20. The three-dimensional printing method as claimed in claim 18, **characterized in that** the controlling a waiting duration comprises: controlling the forming platform carrying the at least one base layer to move to a position that is a predetermined distance away from a build surface and remain stationary for a predetermined duration.

21. The three-dimensional printing method as claimed in claim 18, **characterized in that** the controlling a liquid discharge height comprises: controlling the forming platform carrying the at least one base layer to move to a position at a preset distance from the build surface.

22. The three-dimensional printing method as claimed in claim 18, **characterized in that** the controlling the movement parameters of the forming platform comprises: adjusting at least one of a movement speed of the forming platform or a movement distance of the forming platform.

23. The three-dimensional printing method as claimed in claim 18, **characterized in that** the adjusting the exposure strategy comprises at least one of: performing regional exposures or extending an exposure time.

24. The three-dimensional printing method as claimed in claim 18, **characterized in that** the adjusting image data of the cavity comprises: dividing a slice image, and dividing a printing cross section into a plurality of portions for printing in sequence.

25. The three-dimensional printing method as claimed in claim 18, **characterized in that** the at least one base layer comprises a covering layer adhered to the target layer and covering or shielding an unfilled portion of the target layer.

26. The three-dimensional printing method as claimed in claim 18, **characterized in that** the at least one base layer comprises a covering layer and at least one intermediate layer, the at least one intermediate layer is adhered to the target layer and the covering layer, the at least one intermediate layer comprises an unfilled portion and a filled portion completely surrounding the unfilled portion, the covering layer covers or shields the unfilled portion of the at least one intermediate layer, and the unfilled portion of the at least one intermediate layer is in communication with the unfilled portion of the target layer.

27. The three-dimensional printing method as claimed in claim 18, **characterized in that** the at least one base layer, the target layer on the build surface, and the build surface collectively define the cavity.

28. The three-dimensional printing method as claimed in claim 18, **characterized in that** the build surface is defined by a film.

29. The three-dimensional printing method as claimed in claim 18, **characterized in that** parameters of the adjusted printing strategy are determined according to at least one of a cavity wall thickness, the number of cavities, a cavity area, or a cavity shape.

30. The three-dimensional printing method as claimed in claim 18, **characterized in that** the adjusted printing strategy comprises:
lowering the forming platform to a predetermined position, a distance between the predetermined position and the build surface being greater than or less than a thickness of the target layer;
keeping the forming platform stationary at the predetermined position for a preset duration;
moving the forming platform from the predetermined position to a printing position, a distance between the printing position and the build surface being the thickness of the target layer; and
projecting light by the light source mechanism to form the target layer.

31. The three-dimensional printing method as claimed in claim 18, **characterized in that** the adjusted printing strategy comprises:
moving the forming platform to a printing position, a distance between the printing position and the build surface being a thickness of the target layer;
keeping the forming platform stationary at the printing position for a preset duration; and
projecting light by the light source mechanism to form the target layer.

32. The three-dimensional printing method as claimed in claim 31, **characterized in that** the preset duration is determined on the basis of a change in a force detected by a force sensor mounted on the forming platform.
